# FASCICULE DE BREVET EUROPEEN

(11) **EP 1 269 060 B1**
(45) Date de publication et mention de la délivrance du brevet: **09.03.2005**
(21) Numéro de dépôt: 01919566.8
(22) Date de dépôt: 26.03.2001
(51) Int. Cl.: F16L 15/06

(54) **ELEMENT FILETE TUBULAIRE POUR JOINT FILETE TUBULAIRE RESISTANT A LA FATIGUE ET JOINT FILETE TUBULAIRE RESULTANT**
MIT EINEM GEWINDE VERSEHENES, RÖHRFÖRMIGES ELEMENT FÜR ERMÜDUNGSBESTÄNDIGE, VERSCHRAUBBARE ROHRVERBINDUNG UND DAMIT HERGESTELLTE ROHRVERBINDUNG
THREADED TUBULAR ELEMENT FOR FATIGUE RESISTANT THREADED TUBULAR JOINT AND RESULTING THREADED TUBULAR JOINT

(30) Priorité: 31.03.2000 FR 0004135
(43) Date de publication de la demande: 02.01.2003
(73) Titulaire: VALLOUREC MANNESMANN OIL & GAS FRANCE, 59620 Aulnoye-Aymeries (FR); SUMITOMO METAL INDUSTRIES, LTD., Osaka-shi, Osaka 541-0041 (JP)
(72) Inventeur: VERDILLON, Lionel, F-69380 Dommartin (FR)
(74) Mandataire: Pellicani, Félix Angelo
(86) Numéro de dépôt international: PCT/FR2001/000911
(87) Numéro de publication internationale: WO 2001/075346

(56) Documents cités:
- WO-A-99/08034
- US-A- 4 549 754
- US-A- 5 931 511

## Description

La présente invention concerne un élément fileté tubulaire mâle ou femelle d'un joint fileté tubulaire particulièrement apte à résister aux sollicitations tant statiques que cycliques.
La présente invention concerne aussi un joint fileté tubulaire particulièrement apte à résister aux sollicitations tant statiques que cycliques.

Les joints filetés tubulaires comprennent un élément muni d'un filetage mâle appelé élément fileté mâle en extrémité d'un premier tube et un élément muni d'un filetage femelle appelé élément fileté femelle en extrémité d'un second tube qui peut être un tube de grande longueur ou un manchon. Ces joints filetés sont notamment utilisés pour constituer des colonnes de tubes de cuvelage ou de production ou des trains de type de forage pour des puits d'hydrocarbures ou pour des puits similaires tels que, par exemple, des puits pour la géothermie.

L'American Petroleum Institute (API) définit dans sa spécification API 5B des joints filetés entre tubes de cuvelage ou entre tubes de production avec notamment des filetages coniques à filets triangulaires arrondis ou trapézoïdaux.

D'autres types de joint filetés sont également connus qui mettent en oeuvre des filetages cylindriques ou coniques à double étage : voir par exemple le brevet US 4 521 042.

Jusqu'à il y a peu de temps, les tubes de cuvelage ou de production devaient essentiellement être capables de résister aux différentes combinaisons de sollicitations statiques, (traction, compression axiales, flexion plane, pression intérieure ou extérieure) malgré leur épaisseur limitée résultant de la nécessité pour pouvoir exploiter un puits profond d'enfiler les unes dans les autres diverses colonnes de diamètres différents.

Au contraire, les tiges de forage qui ne sont utilisées que pour creuser les puits sont soumises à des sollicitations cycliques importantes mais par contre ne sont pas soumises à des exigences d'encombrement, un seul train de tiges d'un diamètre donné étant descendu à un moment donné.

Les sollicitations cycliques, si elles ne sont pas strictement limitées, conduisent en service à des ruptures par fatigue initiées à la racine des filets généralement du côté des flancs porteurs qui sont sous charge.

Ce lieu préférentiel d'amorçage des fissures de fatigue traduit une concentration de contraintes au raccordement entre flanc porteur et fond de filet.

Pour améliorer la résistance aux sollicitations cycliques, il est nécessaire de réduire le niveau des contraintes maximales en réduisant le niveau général de contraintes sur le flanc porteur et en réalisant un raccordement le moins anguleux possible entre flanc porteur et fond de filet.

La spécification API 7D définit des tiges de forages avec des filetages coniques robustes adaptés aux sollicitations en service. Les filets selon API 7D sont de forme triangulaire très arrondie avec des flancs porteurs et d'engagement disposés chacun à 30° par rapport à la normale à l'axe de l'élément fileté.

On rappelle que le flanc porteur est celui qui est disposé sur chaque filet du côté opposé à l'extrémité libre de l'élément. Cette définition sera utilisée tout au long du présent document.

Le fond de filet est arrondi selon un arc de cercle de rayon 0,97 mm (0,038") centré dans l'axe du fond du filet ; cet arc de cercle se raccorde tangentiellement aux flancs.

L'angle de 60° entre flancs de filet résultant de la forme triangulaire des filets permet de faire passer un arc de cercle de rayon notable.

Les sommets de filets sont tronqués de manière à éviter toute interférence radiale entre sommets de filet et fonds de filet du filetage conjugué.

La hauteur des filets ainsi tronqués est de 3,08 mm (0,121") ce qui correspond au double de la hauteur des filets de joints filetés selon API 5B.

Ces moyens peuvent néanmoins se trouver insuffisants puisque le brevet US 4 549 754 décrit un profil de filetage modifié par rapport à la spécification API 7D pour tiges de forage qui le rend apte à réduire encore les concentrations de contraintes.

Le filet selon ce brevet US 4 549 754 présente en coupe un fond qui n'est pas symétrique mais qui comporte un arrondi dont le centre est décalé vers le flanc d'engagement (opposé au flanc porteur) et dont le rayon est augmenté d'environ 50% par rapport au rayon API et vaut 1,45 mm (0,057").

Cet arrondi se raccorde tangentiellement au flanc porteur alors qu'il se raccorde par un profil moins critique avec le flanc d'engagement : simple segment de droite ou rayon de 0,81 mm (0,032") suivi d'un segment de droite.

Le fond du filet est alors davantage creusé que dans un filet API et nécessite donc une très grande épaisseur de tube de départ pour tailler les filets.

Une telle disposition n'est pas envisageable pour les colonnes de tubes destinées à l'exploitation des puits lorsque celles-ci sont soumises à la fois à des sollicitations statiques et dynamiques.

On rencontre maintenant de tettes exigences de tenue aux sollicitations dans les colonnes sous-marines reliant le fond de la mer aux plates-formes d'exploitation en mer des hydrocarbures.

De telles colonnes de tubes dits "risers" dans le langage anglo-saxon de l'homme du métier sont en effet soumises aux sollicitations cycliques causées notamment par les courants qui induisent des mises en vibration de la colonne, par la houle, par les marées et le déplacement éventuel des plates-formes elles-mêmes.

On rencontre également de telles exigences de tenue aux sollicitations dans des puits terrestres, notamment lors de la descente en rotation de tubes pour cimenter les puits dans le cas très fréquent de puits déviés de la verticale présentant des coudes.

C'est pourquoi on a cherché à améliorer les joints filetés tubulaires pour tubes de cuvelage, de production ou pour "risers" de manière à augmenter leur résistance à la fatigue.

La demande de brevet WO 98/50 720 décrit un tel joint fileté tubulaire amélioré.

Les filetages décrits dans ce document possèdent des filets trapézoïdaux dérivés des filets dits "buttress" de la spécification API 5B.

La forme trapézoïdale des filets limite le risque de déformation des éléments filetés susceptible de conduire à leur déboîtement lors du vissage notamment par survissage.

Les fonds de filets sont substantiellement rectilignes et se raccordent à chacun des flancs par un arrondi dont le rayon est compris entre 10 et 50% de la largeur totale du fond de filet (et préférentiellement entre 16 et 26% de cette largeur totale), l'arrondi se terminant tangentiellement au flanc et au fond de filet.

Les hauteurs des filets sont telles qu'on évite toute interférence radiale entre fond de filet d'un filetage et sommet de filet correspondant du filetage conjugué en maintenant entre eux un jeu radial d'au moins 0,25 mm (0,010").

Compte tenu des filetages donnés en exemple, les arrondis en fond de filet sont de l'ordre de 0,5 mm contre 0,15 mm pour les rayons spécifiés par l'API 5B.

De tels rayons peuvent sembler faibles si on les compare à ceux des tiges de forage mais la forme trapézoïdale des filets mis en oeuvre ne permet pas de réaliser d'aussi grands rayons que dans le cas des filets triangulaires à moins d'accepter de réduire de manière rédhibitoire la surface portante des flancs en contact.

Les filetages selon ce document WO 98/50 720 ne sont en outre pas adaptés à des filets dits interférents qui présentent une interférence radiale entre sommets de filet d'un filetage et fonds de filet correspondant du filetage conjugué. Les filets présentés sont du type « coin » à largeur variable comme ceux décrits dans le brevet US Re 30 647.

On a cherché dans la présente invention à réaliser un élément fileté tubulaire mâle ou femelle pour joints filetés tubulaires, qui soit particulièrement résistant à la fois :
a) aux sollicitations statiques, notamment de traction axiale, de compression axiale, de flexion, de torsion, de pression intérieure ou extérieure, de déboîtement lors du vissage, simples ou combinées (par exemple traction + pression intérieure) ;
b) aux sollicitations cycliques.

On a désigné un tel élément fileté dans la suite du présent document comme possédant un profil anti-fatigue.

On a aussi cherché à ce que l'élément fileté tubulaire selon l'invention puisse être réalisé avec toutes sortes de filetages, coniques, cylindriques, combinés cylindro-coniques, à un ou plusieurs étages, à filets trapézoïdaux ou triangulaires, interférents ou non interférents ; les filetages non interférents pourront par exemple être du type décrit dans la demande EP 454 147 à contact simultané des deux flancs avec ceux du filet conjugué (dits encore "rugged thread"), à frettage axial ou de type coin à largeur variable comme décrit par exemple dans le brevet US Re 30 647.

On a en outre cherché à ce que l'élément fileté puisse être facilement réalisé et facilement contrôlé.

L'élément fileté selon l'invention doit pouvoir être utilisé pour constituer des joints filetés destinés à des colonnes de tubes de production d'hydrocarbures, de cuvelage de puits ou d'exploitation sous-marine ("risers") ou destinés à des usages similaires.

On a en outre cherché à réaliser des joints filetés tubulaires étanches, notamment aux gaz, même sous sollicitations cycliques.

L'élément fileté selon l'invention doit en variante pouvoir être utilisé pour constituer des trains de tiges de forage.

On a aussi cherché à réaliser un joint fileté tubulaire dans lequel un seul des éléments filetés, par exemple l'élément femelle, a été modifié pour résister aux sollicitations cycliques mais qui est compatible avec un élément fileté conjugué non modifié.

En variante, on a aussi cherché à réaliser un joint fileté tubulaire dans lequel les deux éléments filetés ont été modifiés pour résister aux sollicitations cycliques.

Selon l'invention, l'élément fileté tubulaire mâle ou femelle à profil anti-fatigue est réalisé en extrémité d'un tube et comporte un filetage extérieur mâle ou intérieur femelle selon que l'élément fileté est du type mâle ou femelle.

Les filets comprennent un sommet de filet, un fond de filet, un flanc porteur rectiligne, un flanc d'engagement rectiligne et deux zones de raccordement tangentiel dîtes « de fond de filet ».

Chacune des deux zones de raccordement tangentiel de fond de filet est disposée entre le fond de filet et un des deux flancs de filet dit « flanc correspondant » et comprend un arc de cercle.

Au moins une des deux zones de raccordement tangentiel de fond de filet dite « zone à rayons multiples » comprend un arc de cercle dit « arc de cercle principal » dont le cercle support coupe la droite support du flanc correspondant en un point dit « point de référence flanc », et une courbe régulière dite « courbe secondaire » de part et d'autre de l'arc de cercle principal qui raccorde tangentiellement celui-ci d'une part au flanc correspondant et d'autre part au fond de filet : un raccordement non tangentiel introduirait en effet un pic de contraintes particulièrement néfaste en fatigue au niveau du point singulier de raccordement.

De même, la courbe secondaire doit être régulière, c'est-à-dire ne présentant pas de point singulier susceptible d'introduire à ce niveau un pic de contraintes.

Au point de référence flanc, la tangente au cercle support de l'arc de cercle principal fait un angle aigu strictement positif avec la droite support du flanc correspondant.

On convient dans la suite du présent document que le sens positif est tel que l'arc de cercle principal ne creuse pas la matière des filets : un angle négatif entre tangente et flanc serait évidemment particulièrement néfaste pour la tenue en fatigue.

Ledit cercle support de l'arc de cercle principal coupe ou est tangent à la droite support du fond de filet et la tangente au dit cercle support fait au point considéré d'intersection ou de tangence un angle compris entre -15° et +15° avec la droite support du fond de filet.

Lorsque le cercle support de l'arc de cercle principal est tangent à la droite support du fond de filet, cet angle est nul et la courbe secondaire du côté fond de filet se réduit à un point.

Lorsque le fond de filet se réduit à un point, la droite support du fond de filet est par convention la droite passant par le fond de filet qui est parallèle à l'axe de l'élément fileté.

La forme et la disposition de l'arc de cercle principal de toute zone à rayons multiples est parfaitement définie :
- par la position du point de référence flanc,
- par l'angle entre tangente au cercle support de l'arc de cercle principal au point de référence flanc et flanc correspondant,
- et par l'angle entre tangente au dit cercle et fond de filet.

Le rayon de l'arc de cercle principal de chaque zone à rayons multiples de fond de filet est supérieur à celui de l'arc de cercle dit « arc de cercle standard » passant par ledit point de référence flanc qui constituerait à lui seul une zone de raccordement tangentiel entre le flanc correspondant et le fond de filet.

L'invention permet ainsi d'utiliser un rayon de raccordement élevé dans les zones critiques situées vers le milieu de la zone de raccordement où est disposé l'arc de cercle principal et des rayons plus faibles à la jonction avec le flanc correspondant et avec le fond de filet où sont disposées les courbes secondaires, ceci sans consommer exagérément de hauteur de filet.

Pour une hauteur de filet donné, plus le point de référence flanc est près du fond de filet, plus la surface de flanc disponible pour porter sur la surface correspondante de l'élément fileté conjugué est grande, ce qui augmente les performances statiques du joint fileté résultant.

Dans le cas des éléments filetés de l'état de la technique, la hauteur radiale de la zone de raccordement (distance du point de référence flanc au fond de filet) est proportionnelle au rayon de cette zone. Par conséquent, pour ces éléments filetés et pour une hauteur de filet donné, tout gain sur les caractéristiques de fatigue (sollicitations cycliques) a pour conséquence un affaiblissement des caractéristiques statiques.

Dans le cas de la présente invention, du fait de l'angle positif entre tangente au cercle support de l'arc de cercle principal et flanc, la hauteur radiale de la zone de raccordement est proportionnelle au rayon de l'arc de cercle principal mais le coefficient de proportionnalité est d'autant plus faible que cet angle positif est grand. On peut alors chercher à améliorer soit la tenue en fatigue à caractéristiques statiques données soit les caractéristiques statiques à teneur en fatigue donnée ou encore simultanément la tenue en fatigue et les caractéristiques statiques.

Préférentiellement, l'angle entre tangente au cercle support de l'arc de cercle principal de la zone à rayons multiples considérée et flanc correspondant au point de référence flanc est compris entre +10° et (70°-J), J désignant l'angle de flanc correspondant, c'est-à-dire l'angle entre la partie rectiligne du flanc considéré et la normale à l'axe de l'élément fileté tubulaire. L'angle de flanc est compté positivement lorsque le flanc considéré ne tend pas à surplomber le fond de filet.

Très préférentiellement, l'angle entre tangente au cercle support de l'arc de cercle principal de la zone à rayons multiples considérée et flanc porteur au point de référence flanc est compris entre +15° et (45°-J), J ayant la même définition que précédemment.

Une configuration avec angle de flanc positif ou nul est préférable du point de vue concentration des contraintes à la racine des filets.

Préférentiellement, le rayon de l'arc de cercle principal de la zone à rayons multiples est compris entre 150 et 250% de celui de l'arc de cercle standard qui constituerait une zone de raccordement tangentielle passant par le point de référence flanc.

Préférentiellement aussi, chaque courbe secondaire de la zone à rayons multiples est un arc de cercle.

Très préférentiellement, le rapport du rayon de l'arc de cercle de chaque courbe secondaire à celui de l'arc de cercle principal est compris entre 0,1 et 0,4.

La valeur minimale de ce rapport évite une remontée excessive des contraintes au niveau des courbes secondaires.

La valeur maximale du rapport limite l'étendue globale de la zone à rayons multiples.

L'invention peut s'appliquer en modifiant le profil des filets soit du côté d'un seul flanc, notamment le flanc porteur qui est généralement le plus chargé, soit sur les deux flancs.

Elle peut aussi s'appliquer tant pour des filets triangulaires que trapézoïdaux à largeur fixe ou variable et pour des filetages coniques, cylindriques, combinés, à simple ou multiples étages.

Divers modes de réalisation seront exposés plus loin de manière non limitative de la portée de l'invention.

L'invention concerne également un joint fileté tubulaire à résistance élevée aux sollicitations statiques et cycliques, comprenant un élément fileté tubulaire mâle en extrémité d'un premier tube assemblé par vissage à un élément fileté tubulaire femelle en extrémité d'un second tube au moyen d'un filetage mâle sur l'élément fileté tubulaire mâle et d'un filetage femelle sur l'élément fileté tubulaire femelle.

Par tube, on entend aussi bien un tube de grande longueur qu'un tube de faible longueur tel qu'un manchon.

Les filets de chacun des filetages comprennent un sommet de filet, un fond de filet, un flanc porteur rectiligne, un flanc d'engagement rectiligne et quatre zones de raccordement qui comprennent chacune un arc de cercle.

Parmi ces quatre zones, deux zones dites de raccordement tangentiel de fond de filet raccordent chacune le fond de filet à un flanc dit flanc correspondant et deux zones dites de raccordement de sommet de filet raccordent chacune le sommet de filet à un flanc.

Le profil et la disposition de chaque zone de raccordement de sommet de filet sont adaptés pour ne pas interférer avec la zone de raccordement tangentiel de fond de filet de l'élément fileté conjugué.

Au moins un des deux éléments filetés, mâle ou femelle, est un élément fileté tubulaire à profil anti-fatigue selon la présente invention.

Préférentiellement selon une variante, au moins une zone de raccordement de sommet de filet d'un élément fileté tubulaire opposée à une zone de raccordement tangentiel de fond de filet à rayons multiples d'un élément fileté tubulaire à profil anti-fatigue conjugué est une zone dite suiveuse qui comprend deux arcs de cercle qui se raccordent tangentiellement l'un à l'autre dont un arc de cercle principal et un arc de cercle secondaire, ce dernier pour effectuer le raccordement tangentiel de la zone de raccordement de sommet de filet au flanc correspondant.

En outre, au point dit "de raccord haut" du flanc correspondant où le cercle support de l'arc de cercle principal de la zone suiveuse coupe la droite support du flanc correspondant, la tangente au dit cercle fait un angle aigu strictement négatif avec la droite support du flanc considéré.

Selon la convention indiquée plus haut dans le texte, un tel signe signifie que l'arc de cercle principal de sommet de filet mord dans la matière du filet.

Une telle disposition permet d'augmenter la surface des flancs en contact pour une hauteur de filet donnée.

Selon une variante avantageuse du point de vue coût, seul un des éléments filetés, mâle ou femelle, est du type à profil anti-fatigue selon l'invention et est compatible avec l'autre élément fileté qui est un élément fileté de l'état de la technique.

Selon une autre variante avantageuse du point de vue maximisation des performances, les deux éléments filetés, mâle et femelle, sont du type à profil anti-fatigue selon l'invention.

Selon une variante, le joint fileté tubulaire selon l'invention s'applique à des filetages dits interférents dans lesquels le sommet de filet d'un filetage interfère radialement avec le fond de filet du filetage conjugué.

Selon une autre variante, le joint fileté tubulaire selon l'invention s'applique à des filetages dans lesquels les deux flancs de chaque filet sont en contact avec ou sans pression de contact avec les deux flancs de filet du filetage conjugué, ceci sur au moins une partie de la longueur des filetages : l'invention s'applique donc ainsi aux filets dits "rugged thread", à frettage axial ou encore coin à largeur variable.

D'autres avantages et caractéristiques de l'invention apparaîtront dans la description détaillée ci-après et les dessins annexés, qui pourront donc non seulement servir à mieux faire comprendre l'invention mais aussi contribuer à sa définition, le cas échéant.

Toutes les figures ci-après définies sont relatives à des demi-coupes longitudinales passant par l'axe de l'élément ou du joint fileté.

La figure 1 représente un assemblage fileté manchonné entre deux tubes au moyen de filetages coniques.

La figure 2 représente un assemblage fileté dit intégral entre deux tubes au moyen de filetages cylindriques disposés sur deux étages.

La figure 3A représente quelques filets trapézoïdaux d'un élément fileté femelle de l'état de la technique.

Les figures 3B, 3C, 3D et 3E représentent les zones de raccordement entre les faces des filets de la figure 3A.

La figure 4A représente quelques filets trapézoïdaux d'un élément fileté mâle selon l'invention.

Les figures 4B, 4C, 4D et 4E représentent les zones de raccordement entre les faces des filets de la figure 4A.

Les figures 4F et 4G représentent chacune un détail de la figure 4B.

La figure 5A représente quelques filets trapézoïdaux d'un joint fileté selon l'invention constitué par l'assemblage des éléments filetés des figures 3A et 4A.

La figure 5B représente un détail de l'assemblage de la figure 5A au niveau des zones de raccordement des figures 3C et 4B.

La figure 6A représente quelques filets trapézoïdaux d'une variante d'un élément fileté femelle selon l'invention.

Les figures 6B, 6C, 6D et 6E représentent les zones de raccordement entre les faces des filets de la figure 6A.

La figure 7A représente quelques filets trapézoïdaux d'une variante d'un élément fileté mâle selon l'invention.

Les figures 7B, 7C, 7D et 7E représentent les zones de raccordement entre les faces des filets de la figure 7A.

La figure 8A représente quelques filets trapézoïdaux d'une variante d'un joint fileté selon l'invention constitué par l'assemblage des éléments filetés des figures 6A et 7A.

La figure 88 représente un détail de l'assemblage de la figure 8A au niveau des zones de raccordement des figures 6C et 7B.

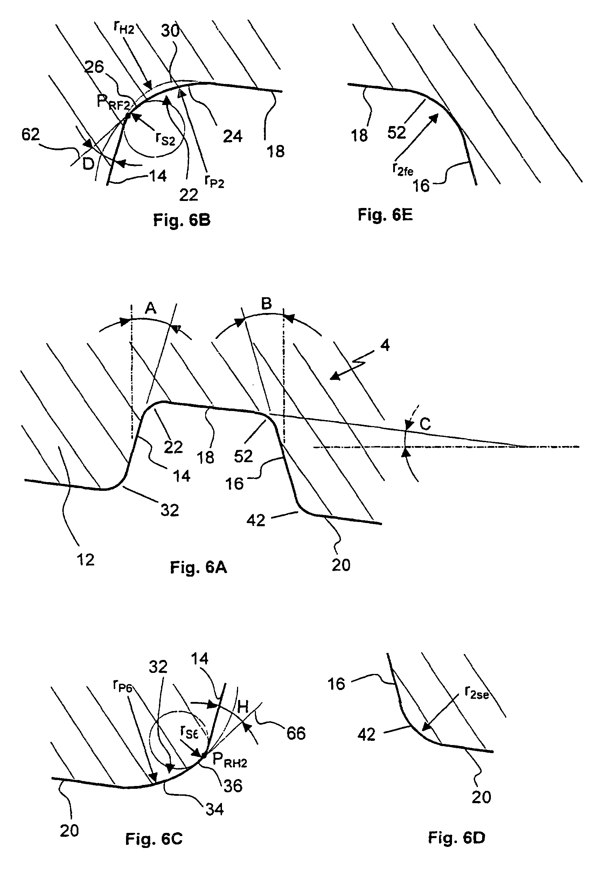

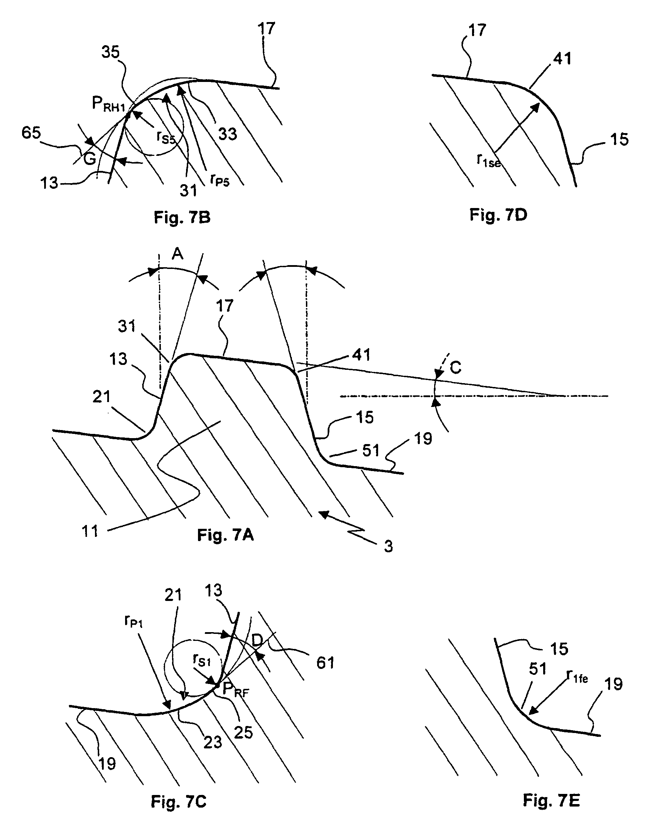

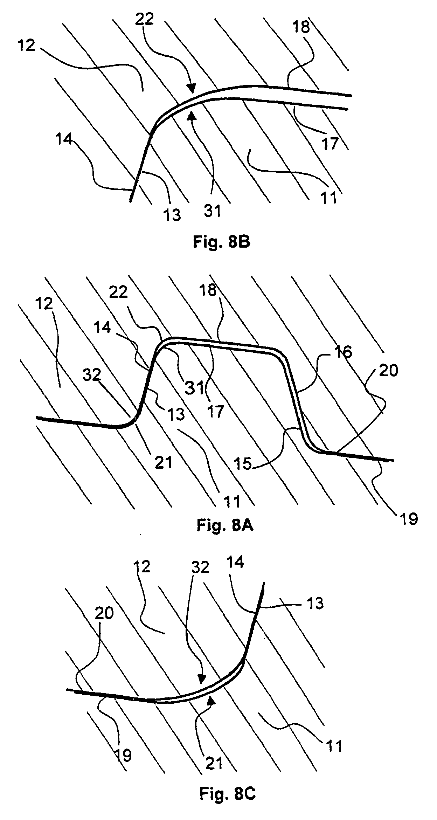

La figure 8C représente un détail de l'assemblage de la figure 8A au niveau des zones de raccordement des figures 6B et 7C.

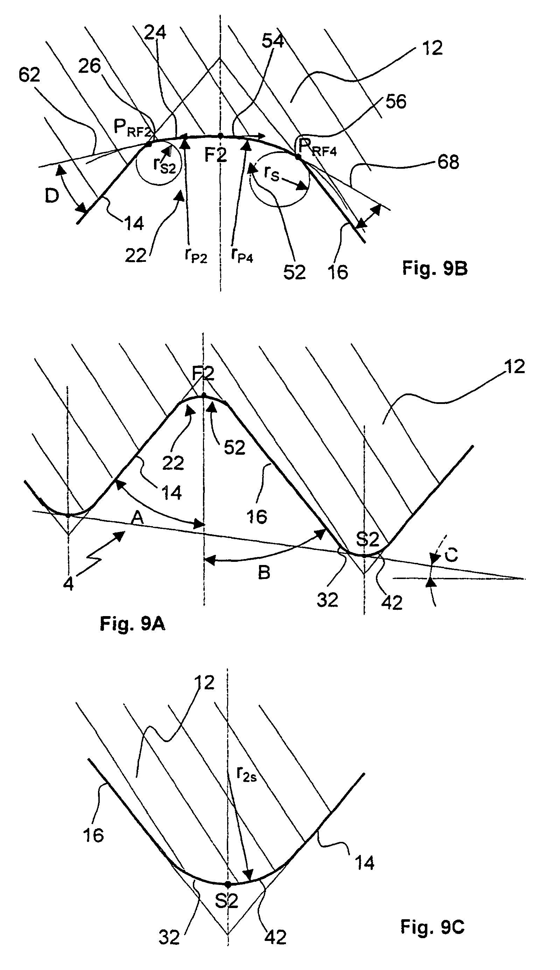

La figure 9A représente quelques filets triangulaires d'une autre variante d'un élément fileté femelle selon l'invention.

Les figures 9B et 9C représentent les zones de raccordement entre les flancs des filets de la figure 9A.

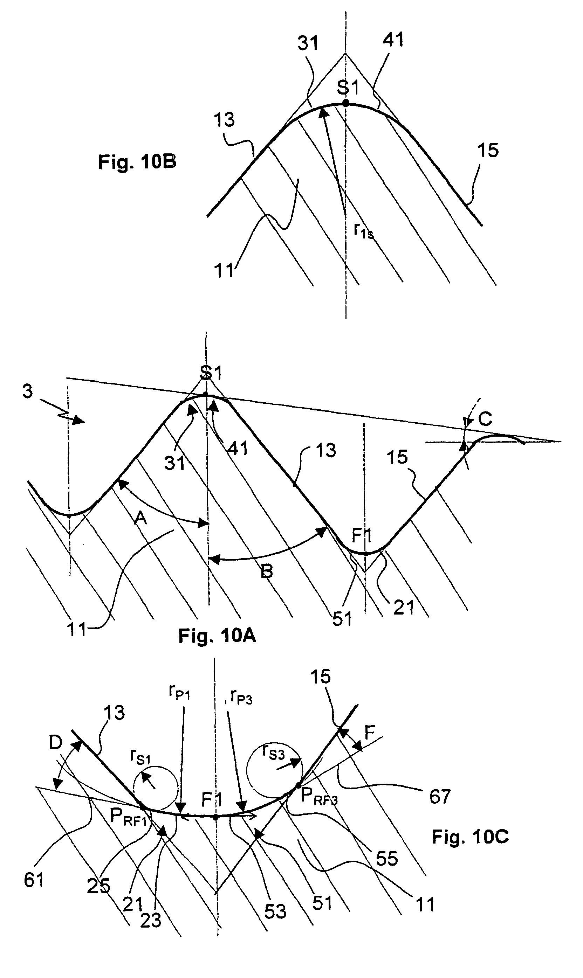

La figure 10A représente quelques filets triangulaires d'une autre variante d'un élément fileté mâle selon l'invention.

Les figures 10B et 10C représentent les zones de raccordement entre les flancs des filets de la figure 10A.

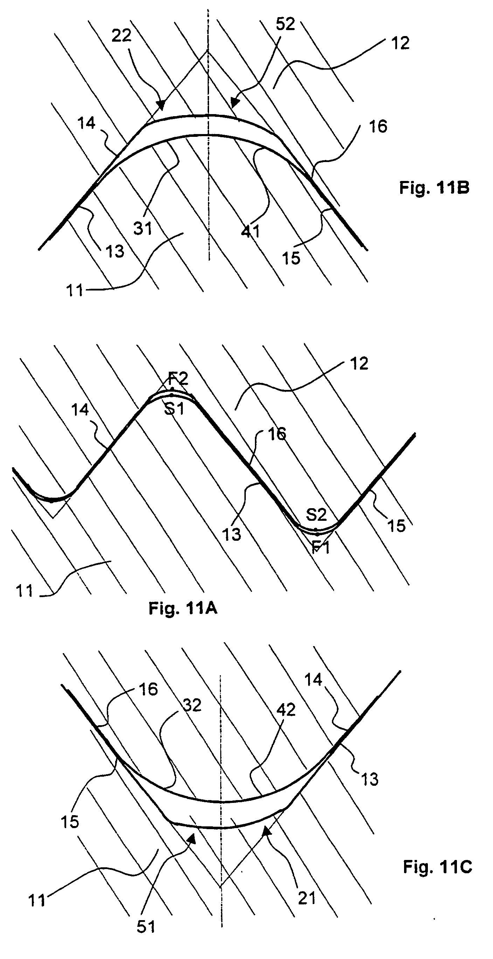

La figure 11A représente quelques filets d'une autre variante de joint fileté selon l'invention constitué par l'assemblage des éléments filetés des figures 9A et 10A.

La figure 11B représente un détail de l'assemblage de la figure 11A au niveau des zones de raccordement des figures 9C et 10B.

La figure 11C représente un détail de l'assemblage de la figure 11A au niveau des zones de raccordement des figures 9B et 10C.

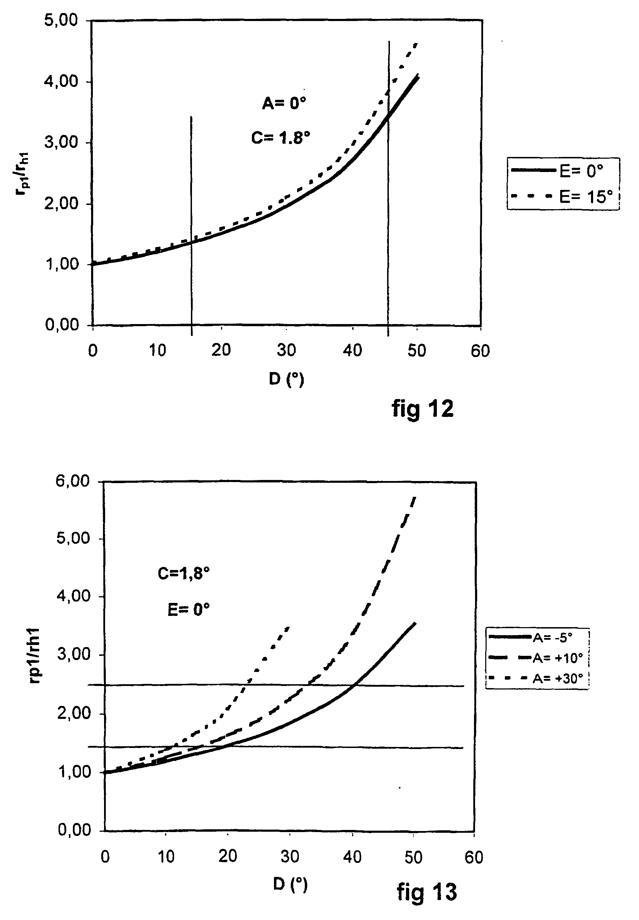

La figure 12 est un graphique représentant la variation du rapport du rayon de l'arc de cercle principal à celui du cercle standard d'une zone de raccordement en fonction de l'angle au point de référence flanc pour différentes valeurs de l'angle au point de raccord de fond de filet.

La figure 13 représente le même graphique pour différentes valeurs d'angle de flanc porteur.

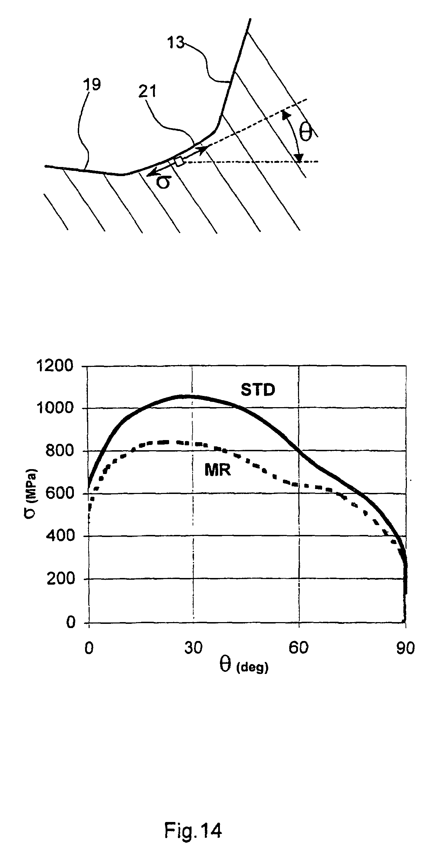

La figure 14 est un graphique représentant la variation de la contrainte principale en fonction de la position angulaire sur la zone de raccordement entre fond de filet et flanc porteur d'un joint fileté tubulaire soumis à la pression intérieure d'un fluide.

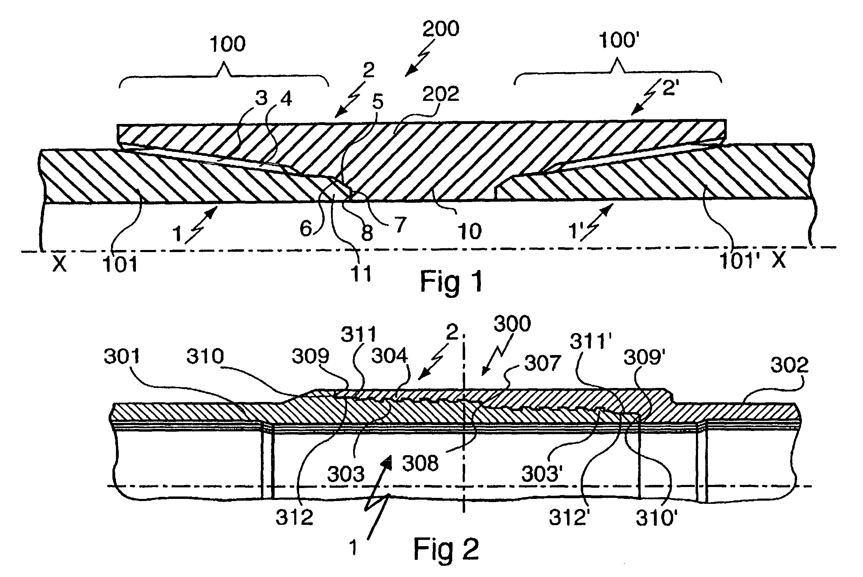

La figure 1 représente un assemblage fileté manchonné 200 entre deux tubes de grande longueur 101, 101'.

Par tubes de grande longueur, on entend des tubes de plusieurs mètres de longueur, par exemple d'environ 10 m de longueur.

De tels tubes sont couramment assemblés pour constituer des colonnes de tubes de cuvelage ou de production ou de "risers" pour les puits d'hydrocarbures terrestres ou en mer ou des trains de tiges de forage pour les mêmes puits.

Les tubes peuvent être réalisés en toutes sortes d'aciers non alliés, faiblement alliés ou fortement alliés, voire en alliages ferreux ou non ferreux pour s'adapter aux différentes conditions de service : niveau de sollicitation mécanique, caractère corrosif du fluide intérieur ou extérieur aux tubes.

On peut également utiliser des tubes en acier peu résistant à la corrosion munis d'un revêtement par exemple en matériau synthétique empêchant tout contact entre l'acier et le fluide corrosif.

Les tubes 101, 101' comportent à leurs extrémités des éléments filetés mâles identiques 1, 1' et sont assemblés par l'intermédiaire d'un manchon 202 comportant à chaque extrémité un élément fileté femelle 2, 2'.

Les éléments filetés mâles 1,1' sont respectivement assemblés par vissage dans les éléments filetés femelles 2, 2' en constituant deux joints filetés 100, 100' symétriques réunis par un talon 10 de quelques centimètres de longueur.

Le talon 10 du manchon possède un diamètre intérieur sensiblement identique à celui des tubes 101, 101' de sorte que l'écoulement du fluide circulant intérieurement n'est pas perturbé.

Les joints filetés 100, 100' étant symétriques, on ne décrira le fonctionnement que d'un seul de ces joints.

Dans la figure 1, les filetages ont été schématisés par les génératrices ou les enveloppes de sommet de filet et de fond de filet.

L'élément fileté mâle 1 comprend un filetage mâle 3 selon spécification API 5B, conique à filets selon le cas triangulaires ou trapézoïdaux et disposé sur l'extérieur de l'élément mâle. Le filetage mâle 3 est séparé de l'extrémité libre 7 dudit élément par une lèvre non filetée 11. L'extrémité libre 7 est une surface annulaire sensiblement transversale.

Jouxtant l'extrémité libre 7 sur la surface extérieure de la lèvre 11 se trouve une surface conique de portée 5 dont la conicité est supérieure à celle du filetage mâle 3.

L'élément femelle 2 comprend des moyens conjugués de ceux de l'élément mâle 1, c'est-à-dire qu'ils correspondent de par la forme et sont destinés à coopérer de par leur disposition avec les moyens mâles.

L'élément femelle 2 comprend ainsi intérieurement un filetage femelle conique 4 et une partie non filetée entre le filetage et un talon 10.

Cette partie non filetée comprend notamment une surface annulaire d'orientation sensiblement transversale 8 formant épaulement à l'extrémité du talon et une surface conique de portée 6 à la suite de l'épaulement.

L'assemblage est obtenu par vissage de l'élément mâle 1 dans l'élément femelle 2.

Le vissage du filetage mâle dans le filetage femelle est arrêté lorsque les surfaces transversales 7 et 8 sont en butée l'une contre l'autre. Les surfaces de portée 5, 6 sont conçues pour interférer radialement l'une sur l'autre et sont de ce fait sous pression de contact métal-métal. Les surfaces de portée 5, 6 constituent ainsi des portées d'étanchéité qui rendent le joint fileté étanche même pour des pressions de fluide intérieur ou extérieur élevées.

Si on ne souhaite pas une étanchéité poussée, on peut supprimer le talon 10 donc la surface transversale de butée 8 et les surfaces de portée 5, 6.

En variante, l'assemblage fileté de deux tubes de grande longueur peut se faire directement comme illustré à la figure 2 ; ce type d'assemblage 300 qui ne met en oeuvre qu'un seul joint fileté est qualifié d'intégral.

Le tube 301 est muni à une de ses extrémités d'un élément fileté mâle 1, le second tube 302 étant muni d'un élément fileté femelle 2 à l'extrémité correspondante.

L'élément fileté mâle 1 comprend un filetage mâle extérieur constitué dans le cas présent de 2 étages ou gradins cylindriques 303, 303', à filets triangulaires ronds ou trapézoïdaux séparés par un épaulement annulaire transversal 307, le gradin de plus faible diamètre 303' étant disposé du côté extrémité libre 309' de l'élément, laquelle extrémité libre 309' est une surface annulaire transversale.

Entre partie filetée 303' et surface d'extrémité 309' se trouve extérieurement une surface de portée conique 311'.

A l'opposé sur l'élément mâle, la partie filetée 303 est prolongée par une partie non filetée comprenant une surface de portée conique 311 et une surface annulaire transversale 309 formant épaulement.

L'élément fileté femelle 2 comprend intérieurement des moyens femelles conjugués des moyens mâles.

L'élément femelle 2 comprend ainsi un filetage femelle constitué de 2 gradins cylindriques 304, 304' séparés par un épaulement annulaire transversal 308, le gradin de plus grand diamètre 304 étant disposé vers l'extrémité libre annulaire transversale 310 de l'élément femelle.

L'élément femelle comprend en outre deux surfaces coniques de portée 312, 312' correspondant aux surfaces de portée mâles 311, 311' et une surface annulaire transversale 310' formant épaulement à l'extrémité de l'élément opposée à l'extrémité libre 310.

A l'état vissé, les parties filetées mâles 303, 303' sont vissées respectivement dans les parties filetées femelles 304, 304' et les épaulements centraux 307, 308 sont en butée l'un contre l'autre. Les surfaces transversales d'extrémité 309, 309' sont en quasi-contact avec celles d'épaulement respectivement 310, 310' et constituent des butées auxiliaires pour la butée principale 307, 308.

Les surfaces de portée mâles 311, 311' interfèrent radialement respectivement avec les surfaces de portée femelles 312, 312' en développant des pressions de contact métal-métal élevées aptes à assurer l'étanchéité du joint vis-à-vis de fluides extérieurs ou intérieurs.

En variantes non représentées, l'assemblage fileté manchonné peut être à filetages cylindriques et l'assemblage intégral à filetages coniques.

Les filetages peuvent aussi être chacun à deux parties filetées coniques de conicité différente ou du type cylindro-conique, les parties filetées d'un même filetage pouvant être étagées ou non.

Les figures suivantes décrivent plusieurs variantes de filets d'éléments filetés tubulaires pour joint fileté tubulaire destiné à résister tant aux sollicitations statiques que cycliques.

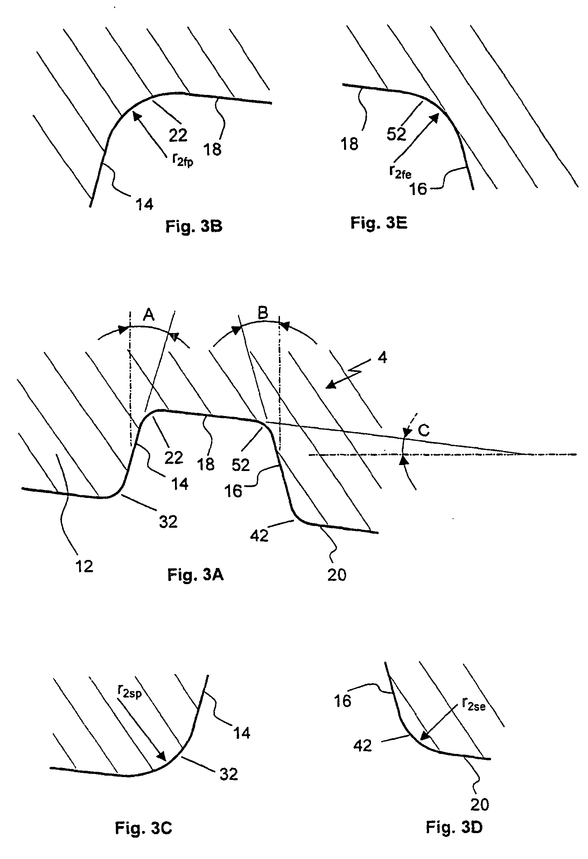

La figure 3A représente un filet 12 du filetage intérieur femelle conique 4 d'un élément fileté tubulaire femelle 2 de la figure 1.

Les filets femelles 12 sont de forme trapézoïdale et comprennent quatre faces rectilignes, à savoir un sommet de filet 20, un fond de filet 18 et deux flancs : un flanc porteur 14 et un flanc d'engagement 16.

Dans le cas représenté, les sommets et les fonds de filet sont inclinés d'un angle C par rapport à l'axe de l'élément fileté ; l'angle C est l'angle du cône du filetage ; la hauteur du filet est constante sur chaque flanc.

On peut aussi alternativement avoir sur le filetage conique des sommets et fonds de filet disposés parallèlement à l'axe de l'élément fileté : la hauteur du filet est alors plus grande du côté flanc d'engagement que du côté flanc porteur pour que le filetage soit conique.

Le flanc d'engagement 16 est le flanc qui vient toucher en premier le flanc correspondant du filetage conjugué lorsque l'on engage les éléments mâles et femelles l'un dans l'autre : il est disposé sur le filet du côté de l'extrémité libre de l'élément fileté.

Le flanc porteur 14 est donc disposé du côté opposé à l'extrémité libre de l'élément fileté.

Le flanc porteur 14 fait un angle A avec la normale à l'axe de l'élément fileté et le flanc d'engagement fait un angle B avec la même normale.

Les angles A et B sont définis comme positifs par convention par le fait que les flancs correspondants 14 et 16 ne surplombent pas le fond de filet 18.

Les flancs sont raccordés au sommet et au fond de filet par quatre zones de raccordement tangentiel 22, 32, 42, 52 constituées chacune d'un simple arc de cercle comme il apparaît aux figures 3B, 3C, 3D et 3E.

Les zones 22 et 52 de rayon respectif r_{2fp} et r_{2fe} sont des zones de raccordement tangentiel de fond de filet tandis que les zones 32 et 42 de rayon r₂ₛₚ et r₂ₛₑ sont des zones de raccordement de sommet de filet.

Le qualificatif tangentiel des zones de raccordement 22, 32, 42, 52 exprime le fait que l'arc de cercle dont ces zones sont constituées est tangent par ses extrémités aux faces qu'elles raccordent. Ceci évite tout point anguleux susceptible de créer un pic de contrainte lorsque ces zones sont soumises à contrainte.

La figure 4A représente un filet 11 d'un filetage extérieur mâle conique 3 d'un élément fileté tubulaire mâle 1 de la figure 1.

Comme le filet femelle 12, le filet mâle 11 est de forme trapézoïdale et comprend quatre faces rectilignes à savoir un sommet de filet 17, un fond de filet 19 et deux flancs : un flanc porteur 13 et un flanc d'engagement 15.

Les filets mâles 11 sont adaptés pour être vissés dans les filets femelles 12. Sommets et fonds de filet mâles sont ainsi par exemple inclinés du même angle C que les sommets et fonds de filet femelle. Les angles A de flanc porteur et B de flanc d'engagement du filet mâle 11 sont identiques à ceux du filet femelle 12.

Les flancs sont raccordés au sommet de filet et au fond de filet par quatre zones de raccordement tangentiel 21, 31, 41, 51.

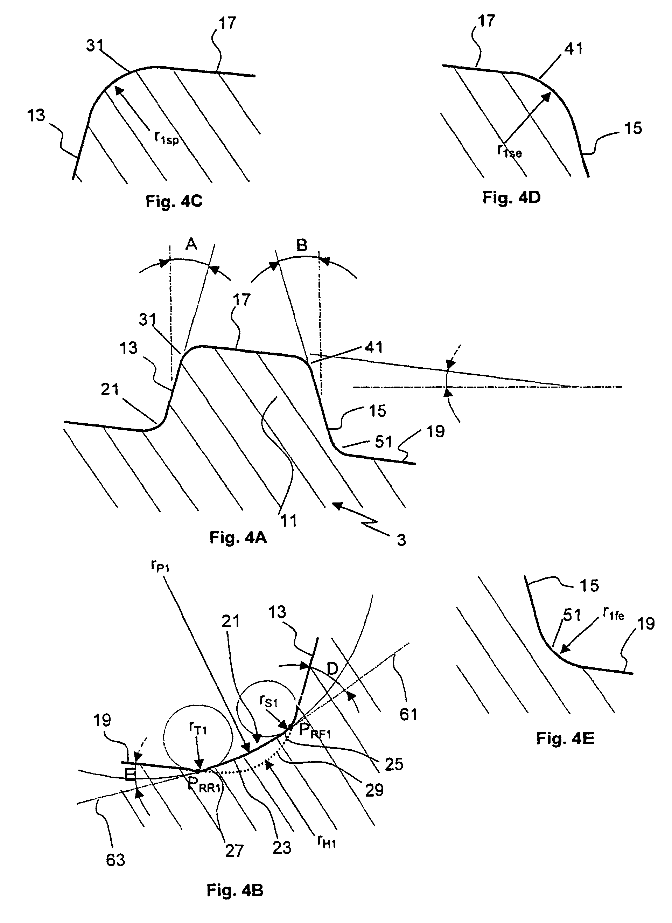

Les zones de raccordement tangentiel de sommet de filet 31, 41 et de fond de filet 51 sont constituées d'un simple arc de cercle de rayon respectivement r₁ₛₚ, r₁ₛₑ et r_{1fe} et sont représentées aux figures 4C, 4D et 4E.

La zone de raccordement tangentiel de fond de filet 21 disposée entre fond de filet et flanc porteur est constituée de plusieurs arcs de cercle consécutifs de rayons différents et tangents entre eux.

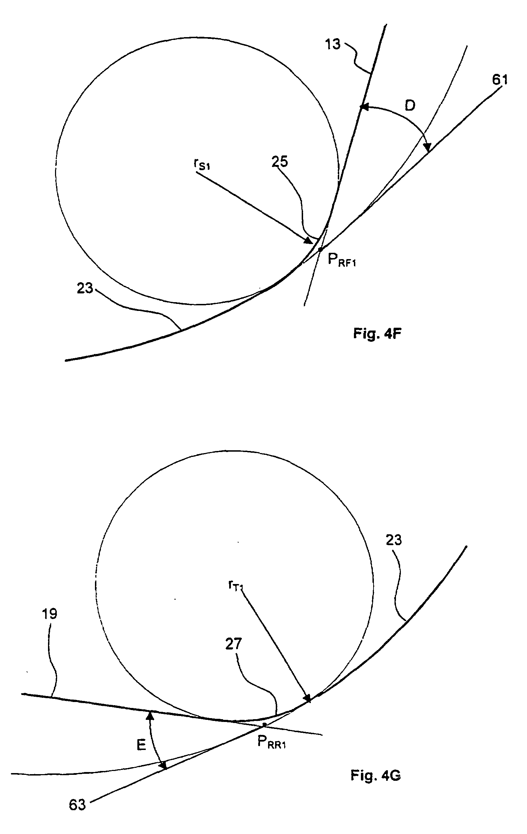

Cette zone 21 représentée en détail aux figures 4B, 4F et 4G est pour cette raison dite "à rayons multiples".

La zone à rayons multiples 21 comprend en partie médiane un arc de cercle dit "arc de cercle principal" 23 de rayon rₚ₁ et un arc de cercle dit "arc de cercle secondaire" de chaque côté de cet arc de cercle principal , un premier arc de cercle secondaire 25 du côté flanc porteur 13 de rayon rₛ₁, et tangent au flanc porteur et un second arc de cercle secondaire 27 du côté fond de filet 19 de rayon r_{T1} et tangent au fond de filet.

Le cercle support de l'arc de cercle principal 23 coupe la droite support du flanc porteur 13 au point P_{RF1} dit "de référence flanc" sans tangenter cette droite support.

Il existe donc au point P_{RF1} un angle D entre la tangente 61 au cercle support de l'arc de cercle principal 23 et la droite support du flanc porteur 13. Cet angle D est strictement positif d'après la convention de signe que nous avons utilisée par laquelle un tel angle est positif lorsque l'arc de cercle principal ne creuse pas la matière du filet ; la tangente 61 est de ce fait intérieure au filet 11 par rapport à la droite support du flanc porteur.

Le cercle support de l'arc de cercle principal 23 coupe la droite support du fond de filet 19 au point P_{RR1} sans tangenter cette droite support.

La tangente 63 au cercle support de l'arc de cercle principal 23 au point P_{RR1} fait donc un angle E faiblement positif avec la droite support du fond de filet 19.

Les inventeurs ont constaté que pour un bon fonctionnement du joint fileté, il convient de limiter l'angle E à un intervalle allant de +15 à -15°, par exemple 10°, un angle négatif correspondant selon notre convention de signe à un arc de cercle principal creusant la matière du filet ou plutôt du fond de filet dans le cas présent.

Le fait de fixer la position du point P_{RF1} sur le flanc porteur 13 ainsi que les angles D et E permet de parfaitement définir le rayon rₚ₁ de l'arc de cercle principal 23.

Lorsque la conicité du filetage est faible (angle C égal à quelques degrés) et que le flanc porteur 13 est sensiblement normal au fond de filet 19, le rayon rₚ₁ est voisin de deux fois le rayon r_{H1} du cercle hypothétique dit « cercle standard » 29 passant par le point P_{RF1} et qui constituerait à lui seul une zone de raccordement tangentiel entre flanc porteur et fond de filet. Ceci signifie que le cercle standard 29 passant par P_{RF1} est tangent à la fois au fond de filet 19 et au flanc porteur 13.

Le facteur le plus influent sur la valeur du rapport (r_{P1}/r_{H1}) compte tenu des variations permises est l'angle D.

Lorsque l'angle D est trop faible, inférieur à 10°, le rapport (r_{P1}/Ir_{H1}) est à peine supérieur à 1 et donc l'effet sur la tenue en fatigue limité. On choisira par conséquent un angle D supérieur à 10° et préférentiellement supérieur à 15°.

Un angle D trop grand peut entraîner une incompatibilité géométrique dans le cas des filets à flanc porteur très incliné positivement. C'est pourquoi on limite supérieurement la valeur de D à la valeur (70°-A) et préférentiellement à (45°-A).

En outre, un angle D trop élevé dans le cas d'angle A fortement positif entraîne des valeurs de rapport r_{P1}/r_{H1} trop grandes qui nécessitent de mettre en oeuvre des arcs de cercles secondaires de faible rayon qui sont sources de pics indésirables de contrainte en service au niveau de ces arcs 25 et 27.

C'est pourquoi, on choisira plutôt les angles D et E compte tenu des valeurs d'angles A et C pour que le rapport r_{P1} / r_{H1} soit compris entre 1,5 et 2,5. Dans le cas présent, E = 10° et D = 30°.

Les arcs de cercles secondaires 25, 27 possèdent un rayon respectivement r_{S1}, r_{T1} inférieur à r_{P1}.

Ceci n'est pas gênant pour la tenue en service des filetages car les inventeurs ont constaté que la partie la plus sollicitée et donc la plus critique de la zone de raccordement de fond de filet est la partie médiane de l'arc de cercle principal 23 en pied de filetage du côté flanc porteur.

En effet, dans les assemblages filetés soumis à des efforts de traction d'intensité importante mais variable, on observe généralement des fissures de fatigue initiées dans la partie médiane de la zone de raccordement de fond de filet du côté flanc porteur qui supporte les efforts de traction sur les éléments filetés.

Un rayon d'arc secondaire trop faible peut néanmoins induire un pic secondaire de contrainte au niveau des arcs 25 ou 27 susceptible d'amorcer en second ressort des fissures de fatigue en service.

Un rayon d'arc secondaire trop grand conduit par contre à des arcs 25 ou 27 de taille relativement trop grande surtout lorsque le rayon r_{P1} est grand.

On choisit préférentiellement une valeur r_{S1} / r_{P1} comprise entre 0,1 et 0,4.

La figure 5A représente le filet mâle 11 de la figure 4A et le filet femelle 12 de la figure 3A une fois les éléments mâles et femelles 1, 2 assemblés par vissage pour constituer un joint fileté tubulaire du type 100 de la figure 1.

Les filets 11, 12 de la figure 5A sont dits interférents car le sommet de filet 20 d'un des filetages, le filetage femelle en l'occurrence, interfère radialement avec le fond de filet 19 du filetage conjugué, le filet mâle en l'occurrence.

Les flancs porteurs mâles et femelles 13, 14 sont également en contact et sont soumis à des efforts de traction axiale générés par le poids des tubes de la colonne et dans le cas des joints filetés de la figure 1 à des efforts générés par la mise en butée des surfaces transversales 7, 8 avec un couple de vissage de plusieurs kN.m.

Il faut noter que des efforts similaires sont obtenus lors de la mise en butée des épaulements 307, 308 de la figure 2.

Pour revenir à la figure 5A, un jeu est par contre ménagé entre sommet de filet mâle 17 et fond de filet femelle 18 ainsi qu'entre flancs d'engagement 15,16.

Ces jeux limitent également les risques d'interférence entre zones de raccordement mâles et femelles telles que 31/22, 41/52 et 51/42, même pour des rayons identiques entre zones de raccordement conjuguées.

Le rayon r₂ₛₚ de la zone de raccordement 32 de sommet de filet femelle du côté flanc porteur est choisi suffisamment grand pour ne pas interférer avec la zone à rayons multiples 21.

Toute interférence entre zones 21 et 32 entraînerait en effet un pic de contrainte et un risque de rupture en service inacceptables.

La mise en oeuvre d'une zone 21 à rayons multiples en fond de filet mâle du côté flanc porteur permet d'augmenter le rayon de la partie critique de la zone de raccordement tangentielle la plus sollicitée si on se fixe un point de départ de la zone de raccordement tangentiel sur le flanc porteur : voir plus haut l'analyse des valeurs du rapport r_{P1}/r_{H1}.

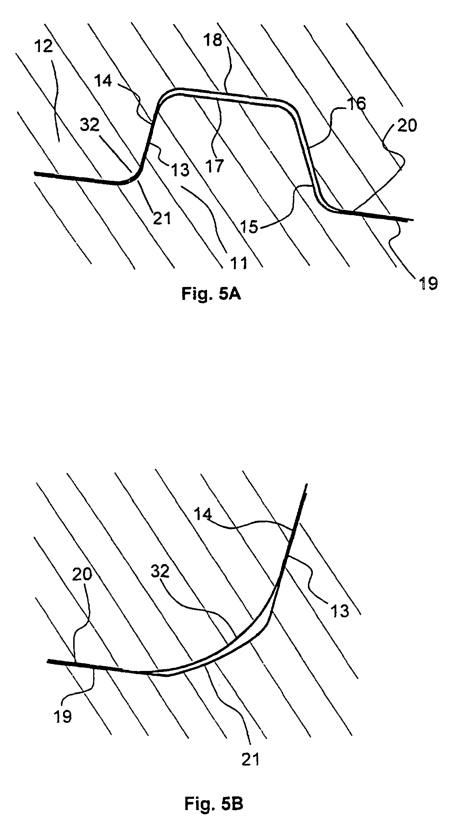

On aurait également pu se fixer une valeur minimale de rayon d'arc principal et analyser le gain sur la surface portante du filet et donc sur les caractéristiques statiques du joint fileté. Il est vrai que ce gain est en partie réduit par l'utilisation d'un simple rayon r₂ₛₚ sur le raccordement femelle conjugué : voir figure 5B.

On notera néanmoins qu'il n'a été nécessaire de modifier par rapport à l'état de la technique qu'une seule zone de raccordement sur un seul élément, l'élément mâle en l'occurrence.

On aurait pu tout aussi bien ne modifier que l'élément femelle. Il est alors possible pour l'utilisateur de mettre en oeuvre des tubes 101 comportant des éléments filetés mâles 1 de l'état de la technique et de n'approvisionner que des manchons 202 avec des filets femelles modifiés comportant une zone à rayons multiples entre fond de filet et flanc porteur.

Il faut enfin souligner que les filets avec zones de raccordement à rayons multiples ne sont pas plus délicats à usiner ou à contrôler que des filets standards de l'état de la technique comportant des zones de raccordement à simple rayon : l'usinage est réalisé à l'aide d'outils de forme adaptée et le contrôle est réalisé classiquement en superposant aux filets deux calibres usinés aux deux extrémités de la tolérance de fabrication (contrôle dit par "overlay").

La figure 6A représente un filet femelle 12 de forme trapézoïdale globalement similaire à celui de la figure 3A.

Ce filet comporte néanmoins par rapport à celui de la figure 3A des différences qui concernent les deux zones de raccordement du côté flanc porteur, à savoir la zone 22 de fond de filet et la zone 32 de sommet de filet qui sont toutes deux des zones à rayons multiples.

La zone 22 est représentée en détail à la figure 6B.

Elle comprend un arc de cercle principal 24 et un arc de cercle secondaire 26 tangent d'un côté à l'arc de cercle principal et de l'autre au flanc porteur 14. L'arc de cercle principal se raccorde tangentiellement au fond de filet 18 de sorte qu'il n'est pas nécessaire de prévoir un deuxième arc de cercle secondaire pour effectuer le raccordement à ce niveau.

L'arc de cercle principal 24 coupe le flanc porteur 14 au point P_{RF2} et la tangente 62 au cercle support de l'arc de cercle principal 24 en P_{RF2} fait un angle D strictement positif avec la droite support du flanc porteur 14.

On utilise la même convention de signe que celle précédemment utilisée.

Sur la figure 4B, l'angle D vaut + 30°.

Du fait de l'angle D positif, le rayon rₚ₂ de l'arc de cercle principal 24 est supérieur à celui r_{H2} de l'arc de cercle standard 30 constituant à lui seul une zone de raccordement tangentiel entre flanc porteur 14 et fond de filet 18.

La valeur du rapport rₚ₂/r_{H2} obéit aux mêmes considérations que celles décrites pour le raccordement 21 de la figure 4B, le cas présent constituant un cas particulier dans lequel l'angle E est nul.

L'arc de cercle secondaire 26 possède un rayon r_{S2} inférieur à celui de l'arc de cercle principal pour les raisons déjà décrites dans le cas de la figure 4B.

La zone de raccordement 32 de sommet de filet est représentée en détail à la figure 6C.

Elle comprend un arc de cercle principal 34 et un arc de cercle secondaire 36, ce dernier étant tangent d'un côté à l'arc de cercle principal 34 et de l'autre côté au flanc porteur 14.

Le cercle support de l'arc de cercle principal 34 coupe le flanc porteur au point P_{RH2} dit "point de raccord haut".

La tangente 66 en P_{RH2} au cercle de l'arc principal 34 fait un angle H avec le flanc porteur 14.

L'angle H est strictement négatif selon la convention de signe que nous utilisons, c'est-à-dire que l'arc principal 34 creuse ou mord la matière du filet 12.

L'intérêt d'une telle configuration pour la zone de raccordement 32 est qu'à rayon identique elle permet de situer le point P_{RH2} plus près du sommet de filet que dans le cas d'un raccordement tel que 42 (voir figure 6D) constitué par un simple arc de cercle.

On peut si on le désire raccorder tangentiellement de manière non représentée à la figure 6C la zone 32 au sommet de filet au moyen d'un deuxième arc de cercle secondaire.

Le rayon r_{P6} de l'arc principal 34 peut en outre être au besoin infini, l'arc 34 devenant alors un segment de droite.

Le rayon r_{S6} de l'arc secondaire 36 est de toutes façons inférieur au rayon rₚ₆ de l'arc principal 34. Il en serait de même pour un autre arc secondaire du côté sommet de filet.

La figure 7A représente un filet mâle 11 de forme trapézoïdale globalement similaire à celui de la figure 4A.

Ce filet est de forme adaptée à être vissé dans le filet femelle 12 de la figure 6A.

Comme dans le cas de la figure 6A, les zones de raccordement 41, 51 du côté flanc d'engagement sont à simple rayon (voir figure 6D et 6E) tandis que celles 21 et 31 du côté flanc porteur sont à rayons multiples.

La zone 21 de raccordement tangentiel de fond de filet (figure 7C) est semblable à celle 21 de la figure 4A sauf que l'angle E étant nul, il n'est pas besoin d'arc de cercle secondaire pour raccorder l'arc de cercle principal 23 au fond de filet 19 : la zone 21 est donc tout à fait le pendant de la zone 22 de la figure 6B ; notamment l'angle D vaut +30°.

La zone 31 de raccordement de sommet de filet (figure 7B) est semblable et fait le pendant de la zone 32 de la figure 6C.

La figure 8A représente le filet mâle 11 de la figure 7A et le filet femelle 12 de la figure 6A une fois les éléments filetés 1, 2 assemblés par vissage pour constituer le joint fileté tubulaire 100 de la figure 1.

Les filets 11, 12 de la figure 8A sont du type interférent comme ceux de la figure 5A : seuls les sommets de filet femelles 20 sont en contact sous pression de contact avec les fonds de filet mâle 19, ainsi que les flancs porteurs mâles et femelles 13,14.

Les figures 8B et 8C montrent la disposition relative des zones de raccordement à rayons multiples 21, 32, 31, 22 assemblées. Du fait de la modification du raccordement en sommet de filet, les flancs porteurs mâles et femelles 13, 14 peuvent porter sur une plus grande surface que dans le cas de la figure 5A et peuvent donc supporter de plus fortes charges statiques en traction.

En outre, les éléments filetés mâles et femelles ayant été tous deux modifiés, la tenue en fatigue de l'assemblage n'est pas limitée par la tenue en fatigue de l'élément fileté non modifié comme dans le cas de la figure 5A.

Par contre, ce type de joint fileté nécessite d'approvisionner des éléments mâles et femelles du type modifié à profil anti-fatigue.

La figure 9A représente un filet femelle 12 de forme triangulaire d'un élément fileté tubulaire femelle 2 de la figure 1.

Le filet femelle 12 comprend :
- un sommet de filet S2
- un fond de filet F2
- un flanc porteur 14 faisant un angle A avec la normale à l'axe de l'élément fileté 2
- un flanc d'engagement 16 faisant un angle B avec la normale à l'axe de l'élément fileté 2.

Les angles A et B sont tous deux égaux à 30° comme dans la spécification API 5B.

La définition du flanc porteur et du flanc d'engagement est la même que celle donnée plus haut.

Le filetage 4 étant conique, la ligne joignant les sommets de filets et celle joignant les fonds de filet fait un angle C avec l'axe de l'élément filet.

Les flancs 14, 16 sont raccordés au sommet S2 et au fond F2 de filet par des zones de raccordement tangentielles 22, 32, 42, 52.

Les zones 32, 42 de sommet de filet sont symétriques l'une de l'autre par rapport à la normale à l'axe de l'élément fileté passant par le sommet S2 ; elles sont constituées d'un simple arc de cercle de rayon r₂ₛ : voir figure 9C.

Les zones 22, 52 de fond de filet ne sont pas symétriques l'une de l'autre par rapport à la normale à l'axe de l'élément fileté passant par le fond F2 ; elles sont par contre à rayons multiples : voir figure 9B.

La zone 22 comprend un arc de cercle principal 24 de rayon rₚ₂ qui est tangent en F2 à la droite support de fond de filet. Le cercle support de l'arc 24 coupe en P_{RF2} la droite support du flanc porteur 14.

Par convention indiquée plus haut dans le présent document, on définit la droite support du fond de filet dans le cas des filets triangulaires comme étant la droite parallèle à l'axe de l'assemblage passant par le fond F2 du filet.

En P_{RF2}, la tangente 62 à l'arc de cercle principal 24 fait un angle D positif avec le flanc porteur 14. L'angle D vaut par exemple 30°.

La zone 22 comprend aussi un arc de cercle secondaire 26 de rayon r_{S2} dont une extrémité est tangente à l'extrémité de l'arc de cercle principal 24 et dont l'autre extrémité est tangente au flanc porteur 14.

Le rayon rₚ₂ de l'arc de cercle principal 24 est de ce fait supérieur au rayon r_{H2} d'un cercle standard non tracé tangent en P_{RF2} au flanc porteur et en F2 à la droite support du fond de filet et induit ainsi des caractéristiques anti-fatigue au raccordement du fond de filet au flanc porteur.

Le rayon r_{S2} est inférieur au rayon r_{P2} et est compris préférentiellement entre 0,1 et 0,4 fois rₚ₂.

La zone 52 comprend un arc de cercle principal 54 de rayon rₚ₄ qui est tangent en F2 à la droite support de fond de filet. Le cercle support de l'arc 54 coupe en P_{RF4} la droite support du flanc d'engagement 16.

En P_{RF4}, la tangente 68 à l'arc de cercle principal 24 fait un angle F positif avec le flanc d'engagement 16. L'angle F vaut par exemple 15°.

La zone 52 comprend aussi un arc de cercle secondaire 56 de rayon r_{S4} dont une extrémité est tangente à l'extrémité de l'arc de cercle principal 54 et dont l'autre extrémité est tangente au flanc d'engagement 16.

Le rayon rₚ₄ de l'arc de cercle principal 54 est de ce fait supérieur au rayon r_{H4} d'un cercle standard non tracé tangent en P_{RF4} au flanc d'engagement 16 et en F2 à la droite support du fond de filet et induit ainsi des caractéristiques anti-fatigue au raccordement du fond de filet au flanc porteur.

Le rayon r_{S4} est inférieur au rayon r_{P4} et est compris préférentiellement entre 0,1 et 0,4 fois rₚ₄.

De cette manière, le dessin de l'élément fileté vise à améliorer la tenue en fatigue de l'ensemble du fond de filet lorsque les deux flancs 14 et 16 sont soumis à des charges cycliques mais que le flanc porteur est davantage sollicité, ce qui est généralement le cas des colonnes de tubes travaillant alternativement en traction et en compression ou soumises à des efforts de flexion.

La figure 10A représente un filet mâle 11 adapté à être vissé dans le filet femelle 12 de la figure 9A.

Ce filet mâle 11 comprend un sommet de filet S1, un fond de filet F1, un flanc porteur 13 et un flanc d'engagement 15.

Les flancs 13, 15 sont raccordés aux sommets S1 et fonds F1 de filet par des zones de raccordement 21, 31, 41, 51.

Les zones 31, 41 de sommet de filet montrées à la figure 10B sont constituées d'un arc de cercle de rayon r₁ₛ et sont semblables à celles 32, 42 de la figure 9C.

Les zones 21, 51 de fond de filet montrées à la figure 10C sont à rayons multiples ; elles sont semblables à celles 22, 52 de la figure 9B et font leur pendant.

La figure 11A représente le filet mâle 11 de la figure 10A et le filet femelle 12 de la figure 9A assemblés par vissage pour constituer le joint fileté tubulaire de la figure 1.

Les filets 11, 12 sont en contact sous pression de contact par leurs deux flancs : le flanc porteur mâle 13 est en contact avec le flanc porteur femelle 14 et le flanc d'engagement mâle 15 est un contact avec le flanc d'engagement femelle 16.

Il existe par contre un jeu entre sommets et fonds de filets conjugués (F1/S2 et F2/S1) et entre zones de raccordement correspondantes (21/42, 51/32, 41/52, 31/22): voir figures 11B et 11C.

Ce jeu et la forme des filets et des zones de raccordement avec arcs de cercle principaux à grand rayon en fond de filet permettent la bonne tenue en fatigue en traction-compression ou en flexion de ce type de joint fileté tubulaire à filets triangulaires.

Les figures 12 et 13 illustrent l'influence pour différentes combinaisons d'angles A et E de l'angle D sur la valeur du rapport r_{P1}/r_{H1} du rayon de l'arc principal de la zone à rayons multiples de fond de filet à celui de l'arc de cercle standard constituant zone de raccordement tangentiel à lui seul.

Il apparaît aux figures 12 et 13 que le rapport r_{P1}/r_{H1} augmente avec l'angle D. On voit sur la figure 12 que l'influence de l'angle E est modeste et est en rapport avec les faibles variations tolérées pour cet angle : un angle E de 15° permet d'obtenir des valeurs r_{P1}/r_{H1} légèrement plus élevées que lorsque E = O°.

Pour les flancs porteurs de filets trapézoïdaux qui sont généralement peu inclinés et correspondent à (A-C) voisin de 0°, l'angle D peut être avantageusement choisi entre 15 et 45°, ce qui correspond à la plage préférentielle revendiquée pour cet angle lorsque l'angle A est nul.

La figure 13 montre l'influence de l'angle A: le rapport r_{P1}/r_{H}1 augmente lorsque l'angle A augmente en valeur algébrique.

Un angle A légèrement négatif (flancs porteurs surplombants de filets en crochet dits « hook threads ») nécessite de choisir un angle D relativement grand pour obtenir un gain notable sur rₚ₁.

Un angle A très positif impose de limiter la valeur de l'angle D à 30°, voire 20° : On rencontre de telles valeurs d'angle A sur des filets triangulaires.

Les flancs d'engagement de filets trapézoïdaux sont en outre généralement plus fortement inclinés que les flancs porteurs : l'influence de l'angle B peut être directement calquée sur celle l'angle A.

La figure 14 illustre la variation de la contrainte principale dans la zone de raccordement entre fond de filet et flanc porteur dans la partie médiane du filetage dans la configuration suivante de joint fileté pour tubes « risers » de jonction entre fond de la mer et plate-forme d'exploitation de gisements sous-marins :
- tubes de diamètres extérieurs 339,7 mm (13 3/8") réunis par joints filetés manchonnés du type de la figure 1
- filetages coniques (conicité 1/6 soit un angle C de 4,8°) ;
- 4 filets par pouce (pas de filetage = 6,35 mm) ;
- filets trapézoïdaux de hauteur 2,1 mm à sommets et fonds parallèles à l'axe des tubes ;
- flancs porteurs droits (A = 0°) ;
- flancs d'engagement inclinés (B = 15°) ;
- charge axiale de traction entraînant une contrainte de traction au corps des tubes égale à 80 % de la limite d'élasticité du matériau ;
- joints vissés en butée avec un couple de vissage standard.

On a comparé sur la figure 14 la valeur calculée numériquement de la contrainte principale de traction sur un cube élémentaire de matière en surface d'une zone de raccordement entre fond de filet et flanc porteur dans le cas d'un raccordement standard avec un seul arc de cercle de rayon 0,375 mm (courbe STD) et avec un raccordement à rayons multiples (courbe RM).

Les paramètres de la zone à rayons multiples sont :
D = 30° E = 0°
rₚ₁ = 0,64 mm rₛ₁ = 0,19 mm Rₚ₁/rₛ₁ = 0,3
Position du point P_{RF1} sur le flanc porteur = à 0,32 mm de la droite support du fond de filet.

On a fait figurer sur la figure 14 un cube élémentaire de matière en surface de la zone de raccordement à la position angulaire θ et la valeur de la contrainte principale σ de traction sur la face de ce cube normale à la tangente à la surface de la zone de raccordement en fonction de la position angulaire θ; la position 0° correspond à l'extrémité de la zone de raccordement avec le fond de filet et la position 90° à l'autre extrémité de la zone du côté flanc porteur.

On constate un maximum de la contrainte principale σ dans la partie médiane de la zone de raccordement et notamment autour de la position angulaire 30°.

L'utilisation d'un raccordement à rayons multiples a permis d'abaisser légèrement la position du point de référence flanc à 0,32 mm contre 0,375 mm pour un raccordement standard et d'environ 20 % la valeur maximale de la contrainte principale σ.

Une telle réduction entraîne un gain considérable sur le nombre de cycles avant rupture en fatigue des joints filetés.

L'utilisation d'un rapport r_{S1}/r_{P1} égal à 0,3 permet de limiter l'apparition du pic secondaire de contrainte à la position 70°.

La présente invention ne se limite pas aux modes de réalisation qui viennent d'être exposés.

L'invention peut notamment s'appliquer à des filetages cylindriques (angle C = 0) du type de ceux 303, 303', 304, 304' mis en oeuvre dans les joints filetés tubulaires 300 de la figure 2.

Elle peut s'appliquer aussi à des filets trapézoïdaux, dont les deux flancs sont en contact avec ou sans pression de contact avec les deux flancs du filet conjugué.

C'est le cas des filets dits "rugged thread" pour joints filetés destinés à travailler en traction et en compression tels que ceux décrits dans le document EP 454147. Dans ce document, les flancs porteurs mâles et femelles sont en contact sous pression de contact et les flancs d'engagements mâles et femelles sont aussi en contact sur une proportion notable de la longueur des filetages.

C'est aussi le cas des filets à flancs frettants axialement de la demande de brevet WO 00/14441.

C'est également le cas des filets coin à largeur variable objets du brevet WO 94/29627.

La description des filets triangulaires avec zone de raccordement de fond de filet à rayons multiples sur chaque flanc peut être directement adaptée à de tels filets trapézoïdaux, un filet trapézoïdal n'étant qu'un filet triangulaire dont les sommets et fonds ont été tronqués.

On pourra dans le cas de tels filets trapézoïdaux utiliser en fond de filet des zones de raccordement à rayons multiples de rayon d'arc de cercle principal différent entre zone relative au flanc porteur et zone relative au flanc d'engagement.

Le flanc d'engagement étant généralement moins chargé que le flanc porteur sur les filets trapézoïdaux dont les deux flancs sont en contact avec les flancs correspondants de l'élément fileté conjugué, le rayon principal rₚ pourra avantageusement être plus grand pour le raccordement 21 et/ou 22 du côté flanc porteur que pour celui 51 et/ou 52 du côté flanc d'engagement.

Alternativement le rayon principal rₚ pourra être identique pour les zones 21, 22, 51,52.

## Revendications

1. Elément fileté tubulaire mâle ou femelle (1, 2) pour joint fileté tubulaire (100, 300), réalisé en extrémité de tube (101, 102, 202, 301, 302) et comportant un filetage extérieur mâle (3, 303, 303') ou un filetage intérieur femelle (4, 304, 304') selon que l'élément fileté est du type mâle ou femelle, dont les filets (11, 12) vus en section longitudinale passant par l'axe de l'élément fileté comprennent un sommet de filet (17, 20, S1, S2), un fond de filet (18, 19, F1, F2), un flanc porteur rectiligne (13, 14), un flanc d'engagement rectiligne (15, 16) et deux zones de raccordement tangentiel de fond de filet (21, 22, 51, 52), chacune de ces deux zones étant disposée entre le fond de filet et un des deux flancs dit flanc correspondant et comprenant un arc de cercle, **caractérisé en ce qu'**au moins une des deux zones de raccordement tangentiel de fond de filet dite "zone à rayons multiples" comprend un arc de cercle dit arc de cercle principal (23, 24, 53, 54) dont le cercle support coupe la droite support du flanc correspondant en un point dit point de référence flanc (P_{RF1}, P_{RF2}, P_{RF3}, P_{RF4}) et une courbe régulière dite courbe secondaire (25, 26, 27, 55, 56) de part et d'autre de l'arc de cercle principal, qui raccorde tangentiellement celui-ci d'une part au flanc correspondant et d'autre part au fond de filet et **en ce que** :
a) au point de référence flanc, la tangente (61, 62, 67, 68) au cercle support de l'arc de cercle principal fait un angle aigu (D, F) strictement positif avec la droite support du flanc correspondant, le sens positif étant tel que l'arc de cercle principal ne creuse pas la matière du flanc de filet ;
b) ledit cercle support de l'arc de cercle principal coupe ou est tangent à la droite support du fond de filet selon que la courbe secondaire du côté fond de filet respectivement possède une longueur non nulle ou se réduit à un point, la tangente au dit cercle support (63) faisant au point considéré d'intersection (P_{RR1}) ou de tangence un angle (E) compris entre -15 et +15° avec la droite support du fond de filet.

2. Elément fileté tubulaire selon la revendication 1, **caractérisé en ce qu'**au point de référence flanc de la zone à rayons multiples considérée, l'angle (D, F) entre la tangente au cercle support de l'arc de cercle principal et le flanc correspondant est compris entre 10° et la différence (70°-J) si J mesure algébriquement l'angle (A, B) entre le flanc correspondant et une normale à l'axe de l'élément fileté.

3. Elément fileté tubulaire selon la revendication 2 **caractérisé en ce qu'**au point de référence flanc de la zone à rayons multiples considérée, l'angle (D, F) entre la tangente au cercle support de l'arc de cercle principal et le flanc correspondant est compris entre 15° et la différence (45°-J) si J mesure algébriquement l'angle (A, B) entre le flanc correspondant et une normale à l'axe de l'élément fileté.

4. Elément fileté tubulaire selon l'une quelconque des revendications 1 à 3 **caractérisé en ce que** le rayon (r_{P1}, r_{P2}) de l'arc de cercle principal (23,24) de la zone à rayons multiples est compris entre 150 et 250% de celui (r_{H1}, r_{H2}) de l'arc de cercle standard (29, 30) passant par le point de référence flanc qui constituerait à lui seul une zone de raccordement tangentiel entre le flanc correspondant et le fond de filet.

5. Elément fileté tubulaire selon l'une quelconque des revendications 1 à 4 **caractérisé en ce que** la courbe secondaire (25, 26, 55, 56) de la zone à rayons multiples du côté flanc correspondant est un arc de cercle.

6. Elément fileté tubulaire selon la revendication 5 **caractérisé en ce que** le rapport du rayon (r_{S1}, r_{S2}, r_{S3}, r_{S4}) de l'arc de cercle de ladite courbe secondaire du côté flanc correspondant (25, 26, 55, 56) à celui (r_{P1}, r_{P2}, r_{P3}, r_{P4}) de l'arc de cercle principal d'une zone à rayons multiples est compris entre 0,1 et 0,4.

7. Elément fileté tubulaire selon l'une quelconque des revendications 1 à 5 **caractérisé en ce que** chaque courbe secondaire (25, 26, 27, 55, 56) de la zone à rayons multiples ayant une longueur non nulle est un arc de cercle.

8. Elément fileté tubulaire selon la revendication 7 **caractérisé en ce que** le rapport du rayon (r_{S1}, r_{S2}, r_{S3}, r_{S4}, r_{T1}) de l'arc de cercle de chaque courbe secondaire ayant une longueur non nulle (25, 26, 27, 55, 56) à celui (r_{P1}, r_{P2}, r_{P3}, r_{P4}) de l'arc de cercle principal d'une zone à rayons multiples est compris entre 0,1 et 0,4.

9. Elément fileté tubulaire selon l'une quelconque des revendications 1 à 8 **caractérisé en ce que** seule la zone de raccordement tangentiel de fond de filet avec le flanc porteur (21, 22) est une zone à rayons multiples.

10. Elément fileté tubulaire selon l'une quelconque des revendications 1 à 8 **caractérisé en ce que** chacune des deux zones de raccordement tangentiel de fond de filet est une zone à rayons multiples.

11. Elément fileté tubulaire selon la revendication 10 **caractérisé en ce que** le rayon (r_{P1}, r_{P2}) de l'arc de cercle principal (23, 24) de la zone à rayons multiples du côté flanc porteur est supérieur ou égal à celui (r_{P3}, r_{P4}) de l'arc de cercle principal (53, 54) de la zone à rayons multiples du côté flanc d'engagement.

12. Elément fileté tubulaire selon l'une quelconque des revendications 1 à 11 **caractérisé en ce que** l'angle (A, B) que fait chacun des flancs avec la normale à l'axe de l'élément fileté est positif ou nul.

13. Joint fileté tubulaire (100, 300) à résistance élevée aux sollicitations statiques et dynamiques comprenant un élément fileté tubulaire mâle (1) en extrémité d'un premier tube (101, 301) assemblé par vissage à un élément fileté tubulaire femelle (2) disposé en extrémité d'un second tube (102, 302) au moyen d'un filetage mâle (3, 303, 303') sur l'élément fileté tubulaire mâle et d'un filetage femelle (4, 304, 304') sur l'élément fileté tubulaire femelle, les filets (11,12) de chacun des filetages mâles et femelles comprenant un sommet de filet (17, 20, S1. S2), un fond de filet (18, 19, F1, F2), un flanc porteur rectiligne (13, 14), un flanc d'engagement rectiligne (15, 16) et quatre zones de raccordement comprenant chacune un arc de cercle, dont deux zones de raccordement tangentiel de fond de filet (21, 22, 51, 52) raccordant chacune le fond de filet à un flanc et deux zones de raccordement de sommet de filet (31, 32, 41, 42) raccordant chacune le sommet de filet à un flanc, le profil et la disposition de chaque zone de raccordement de sommet de filet étant adaptés pour ne pas interférer avec la zone de raccordement tangentiel de fond de filet de l'élément fileté conjugué, **caractérisé en ce que** l'un au moins des deux éléments filetés tubulaires est un élément fileté dit à profil anti-fatigue selon l'une quelconque des revendications 1 à 12.

14. Joint fileté tubulaire selon la revendication 13 **caractérisé en ce qu'**au moins une zone de raccordement de sommet de filet d'un élément fileté tubulaire opposée à une zone de raccordement tangentiel de fond de filet à rayons multiples d'un élément fileté tubulaire à profil anti-fatigue conjugué est une zone dite suiveuse (31, 32) qui comprend deux arcs de cercle qui se raccordent tangentiellement l'un à l'autre dont un arc de cercle principal (33, 34) et un arc de cercle secondaire (35, 36), ce dernier pour effectuer le raccordement tangentiel de la zone de raccordement de sommet de filet au flanc correspondant et **en ce qu'**au point dit de raccord haut (P_{RH1}, P_{RH2}) du flanc correspondant où le cercle support de l'arc de cercle principal de la zone suiveuse coupe la droite support du flanc correspondant la tangente au dit cercle fait un angle aigu (G, H) strictement négatif avec la droite support du flanc considéré.

15. Joint fileté tubulaire selon la revendication 13 ou la revendication 14 **caractérisé en ce que** les deux éléments filetés mâle et femelle du joint fileté tubulaire sont du type selon l'une quelconque des revendications 1 à 12.

16. Joint fileté tubulaire selon l'une quelconque des revendications 13 à 15 **caractérisé en ce que** les filetages sont du type interférent, le sommet de filet (20) d'un filetage (4) interférant radialement avec le fond de filet (19) du filetage conjugué (3).

17. Joint fileté tubulaire selon l'une quelconque des revendications 13 à 15 **caractérisé en ce que** les deux flancs de filet (13, 15) d'un filetage (3) sont en contact avec ou sans pression de contact avec les deux flancs de filet (14, 16) du filetage conjugué (4) sur au moins une partie de la longueur des filetages (3, 4).

## Claims

1. A male or female threaded tubular element (1, 2) for a threaded tubular connection (100, 300) formed at the end of a pipe (101, 102, 202, 301, 302) and comprising an external male threading (3, 303, 303') or an internal female threading (4, 304, 304') depending on whether the threaded element is male or female in type, the threads of which (11, 12), viewed in longitudinal cross section passing through the axis of the threaded element, comprise a thread crest (17, 20, S1, S2), a thread root (18, 19, F1, F2), a rectilinear load flank (13, 14), a rectilinear stabbing flank (15, 16) and two tangential thread root junction zones (21, 22, 51, 52) each of these two zones being disposed between the thread root and one of the two flanks termed the corresponding flank and comprising an arc of a circle, **characterized in that** at least one of the two tangential thread root junction zones termed the "multiple radius zone" comprises an arc of a circle termed the principal arc (23, 24, 53, 54) where the support circle cuts the support straight line of the corresponding flank at a point termed the flank reference point (P_{RF1}, P_{RF2}, P_{RF3}, P_{RF4}), and a regular curve termed the secondary curve (25, 26, 27, 55, 56) either side of the principal arc, which tangentially joins this to the corresponding flank on one side and to the thread root on the other and **in that**:
a) at the flank reference point, the tangent (61, 62, 67, 68) of the support circle of the principal arc makes an acute angle (D, F) which is strictly positive with the support straight line of the corresponding flank, the positive sense being such that the principal arc does not cut into the material of the thread flank;
b) said support circle of the principal arc cuts or is tangential to the support straight line of the thread root, depending whether the secondary curve on the thread root side has respectively a non-zero length or reduces to one point, the tangent to said support circle (63) making, at the intersection point (P_{RR1}) or at the tangent point under consideration, an angle (E) in the range -15° to +15° with the support straight line of the thread root.

2. A threaded tubular element according to claim 1, **characterized in that** at the flank reference point of the multiple radius zone under consideration, the angle (D, F) between the tangent to the support circle of the principal arc and the corresponding flank is comprised between 10° and the difference (70°-J) if J is the algebraic angle (A, B) between the corresponding flank and a normal to the axis of the threaded element.

3. A threaded tubular element according to claim 2, **characterized in that** at the flank reference point of the multiple radius zone under consideration, the angle (D, F) between the tangent to the support circle of the principal arc and the corresponding flank is comprised between 15° and the difference (45°-J) if J is the algebraic angle (A, B) between the corresponding flank and a normal to the axis of the threaded element.

4. A threaded tubular element according to any one of claims 1 to 3, **characterized in that** the radius (r_{P1}, r_{P2}) of the principal arc (23, 24) of the multiple radius zone is comprised between 150% and 250% of that (r_{H1}, r_{H2}) of the standard arc (29, 30) passing through the flank reference point which would alone constitute a tangential junction zone between the corresponding flank and the thread root.

5. A threaded tubular element according to any one of claims 1 to 4, **characterized in that** the secondary curve (25, 26, 55, 56) of the multiple radius zone on the corresponding flank side is an arc of a circle.

6. A threaded tubular element according to claim 5, **characterized in that** the ratio of the radius (r_{S1}, r_{S2}, r_{S3}, r_{S4}) of the arc of said secondary curve on the corresponding flank side (25, 26, 55, 56) to that (r_{P1}, r_{P2}, r_{P3}, r_{P4}) of the principal arc of a multiple radius zone is in the range 0.1 to 0.4.

7. A threaded tubular element according to any one of claims 1 to 5, **characterized in that** each secondary curve (25, 26, 27, 55, 56) of the multiple radius zone having a non-zero length is an arc of a circle.

8. A threaded tubular element according to claim 7, **characterized in that** the ratio of the radius (r_{S1}, r_{S2}, r_{S3}, r_{S4}, r_{'T1}) of the arc of each secondary curve having a non-zero length (25, 26, 27, 55, 56) to that (r_{P1}, r_{P2}, r_{P3}, r_{P4}) of the principal arc of a multiple radius zone is in the range 0.1 to 0.4.

9. A threaded tubular element according to any one of claims 1 to 8, **characterized in that** only the tangential junction zone of the thread root with the load flank (21, 22) is a multiple radius zone.

10. A threaded tubular element according to any one of claims 1 to 8, **characterized in that** each of the two tangential junction zones of the thread root is a multiple radius zone.

11. A threaded tubular element according to claim 10, **characterized in that** the radius (r_{P1}, r_{P2}) of the principal arc (23, 24) of the multiple radius zone on the load flank side is greater than or equal to that (r_{P3}, r_{P4}) of the principal arc (53, 54) of the multiple radius zone on the stabbing flank side.

12. A threaded tubular element according to any one of claims 1 to 11, **characterized in that** the angle (A, B) which each of the flanks makes with the normal to the axis of the threaded element is positive or zero.

13. A threaded tubular connection (100, 300) with a high resistance to static and dynamic stresses, comprising a male threaded tubular element (1) at the end of a first pipe (101, 301) connected by screwing to a female threaded tubular element (2) at the end of a second pipe (102, 302) by means of a male threading (3, 303, 303') on the male threaded tubular element and a female threading (4, 304, 304') on the female threaded tubular element, the threads (11, 12) of each of the male and female threadings comprising a thread crest (17, 20, S1, S2), a thread root (18, 19, F1, F2), a rectilinear load flank (13, 14), a rectilinear stabbing flank (15, 16) and four junction zones each comprising an arc of a circle, two of these zones, the tangential thread root junction zones (21, 22, 51, 52), each joining the thread root to one flank and two zones, the thread crest junction zones (31, 32, 41, 42), each joining the thread crest to a flank, the profile and disposition of each thread crest junction zone being adapted so as not to interfere with the tangential thread root junction zone of the mated threaded element, **characterized in that** at least one of the two threaded tubular elements is a threaded element termed an anti-fatigue profile element according to any one of claims 1 to 12.

14. A threaded tubular connection according to claim 13, **characterized in that** at least one thread crest junction zone of a threaded tubular element opposite a tangential thread root junction zone with multiple radii of a mated threaded tubular element with an anti-fatigue profile is a zone termed follower zone (31, 32) which comprises two arcs of circle which join tangentially to each other, namely a principal arc (33, 34) and a secondary arc (35, 36), this latter to produce the tangential thread crest junction of the corresponding flank and **in that** at the point termed the high junction point (P_{RH1}, P_{RH2}) of the corresponding flank where the support circle of the principal arc of the follower zone cuts the support straight line of the corresponding flank, the tangent to said circle makes an acute angle (G, H) which is strictly negative with the support straight line of the flank under consideration.

15. A threaded tubular connection according to claim 13 or claim 14, **characterized in that** the two male and female elements of the threaded tubular connection are of the type defined in any one of claims 1 to 12.

16. A threaded tubular connection according to any one of claims 13 to 15, **characterized in that** the threadings are interference threadings, the thread crest (20) of one threading (4) radially interfering with the thread root (19) of the mated threading (3).

17. A threaded tubular connection according to any one of claims 13 to 15, **characterized in that** the two thread flanks (13, 15) of one threading (3) are in contact with or without contact pressure with the two thread flanks (14, 16) of the mated threading (4) over at least a portion of the length of the threadings (3,4).

## Patentansprüche

1. Rohrförmiges Einsteck- oder Aufnahmegewindeelement (1, 2) für eine Gewinde-Rohrverbindung (100, 300), das am Rohrende (101, 102, 202, 301, 302) hergestellt ist und ein Außengewinde (3, 303, 303') oder ein Innengewinde (4, 304, 304') aufweist, je nachdem, ob das Gewindeelement ein Einsteckelement oder ein Aufnahmeelement ist, dessen Gewindegänge (11, 12) im durch die Achse des Gewindeelements verlaufenden Längsschnitt gesehen einen Gewindegangscheitel (17, 20, SI, S2), einen Gewindeganggrund (18, 19, F1, F2), eine geradlinige Trägerflanke (13, 14), eine geradlinige Eingriffsflanke (15, 16) und zwei tangentiale Gewindeganggrund-Anschlusszonen (21, 22, 51, 52) aufweisen, wobei jede dieser beiden Zonen zwischen dem Gewindeganggrund und einer der beiden Flanken, entsprechende Flanke genannt, angeordnet ist und einen Kreisbogen aufweist, **dadurch gekennzeichnet, dass** mindestens eine der beiden tangentialen Gewindeganggrund-Anschlusszonen, "Zone mit vielen Radien" genannt, einen Hauptkreisbogen genannten Kreisbogen (23, 24, 53, 54), dessen Trägerkreis die Trägergerade der entsprechenden Flanke in einem Flanken-Bezugspunkt genannten Punkt (P_{RF1}, P_{RF2}, P_{RF3}, P_{RF4}) schneidet, und eine sekundäre Kurve genannte regelmäßige Kurve (25, 26, 21, 55, 56) zu beiden Seiten des Hauptkreisbogens aufweist, die diesen tangential einerseits mit der entsprechenden Flanke und andererseits mit dem Gewindeganggrund verbindet, und dass:
a) im Flanken-Bezugspunkt die Tangente (61, 62, 61, 68) zum Trägerkreis des Hauptkreisbogens einen strikt positiven spitzen Winkel (D, F) mit der Trägergeraden der entsprechenden Flanke bildet, wobei die positive Richtung so ist, dass der Hauptkreisbogen das Material der Gewindegangflanke nicht aushöhlt;
b) der Trägerkreis des Hauptkreisbogens die Trägergerade des Gewindeganggrunds schneidet oder tangiert, je nachdem, ob die sekundäre Kurve auf der Seite des Gewindeganggrunds eine Länge ungleich Null besitzt oder sich auf einen Punkt reduziert, wobei die Tangente zum Trägerkreis (63) im betrachteten Schnittpunkt (P_{RR1}) oder Tangierpunkt einen Winkel (E) mit der Trägergeraden des Gewindeganggrunds bildet, der zwischen -15 und + 15° liegt.

2. Rohrförmiges Gewindeelement nach Anspruch 1, **dadurch gekennzeichnet, dass** im Flanken-Bezugspunkt der betrachteten Zone mit vielen Radien der Winkel (D, F) zwischen der Tangente zum Trägerkreis des Hauptkreisbogens und der entsprechenden Flanke zwischen 10° und der Differenz (70°-J) liegt, wenn J algebraisch dem Winkel (A, B) zwischen der entsprechenden Flanke und einer Senkrechten zur Achse des Gewindeelements entspricht.

3. Rohrförmiges Gewindeelement nach Anspruch 2, **dadurch gekennzeichnet, dass** am Flanken-Bezugspunkt der betrachteten Zone mit vielen Radien der Winkel (D, F) zwischen der Tangente zum Trägerkreis des Hauptkreisbogens und der entsprechenden Flanke zwischen 15° und der Differenz (45°-J) liegt, wenn J algebraisch dem Winkel (A, B) zwischen der entsprechenden Flanke und einer Senkrechten zur Achse des Gewindeelements entspricht.

4. Rohrförmiges Gewindeelement nach einem der Ansprüche 1 bis 3, **dadurch gekennzeichnet, dass** der Radius (r_{P1}, r_{P2}) des Hauptkreisbogens (23, 24) der Zone mit vielen Radien zwischen 150 und 250% desjenigen (r_{H1}, r_{H2}) des Standard-Kreisbogens (29, 30) liegt, der durch den Flanken-Bezugspunkt verläuft, welcher alleine eine tangentiale Anschlusszone zwischen der entsprechenden Flanke und dem Gewindeganggrund bilden würde.

5. Rohrförmiges Gewindeelement nach einem der Ansprüche 1 bis 4, **dadurch gekennzeichnet, dass** die sekundäre Kurve (25, 26, 55, 56) der Zone mit vielen Radien auf der Seite der entsprechenden Flanke ein Kreisbogen ist.

6. Rohrförmiges Gewindeelement nach Anspruch 5, **dadurch gekennzeichnet, dass** das Verhältnis zwischen dem Radius (r_{S1}, r_{S2}, r_{S3}, r_{S4}) des Kreisbogens der sekundären Kurve auf der Seite der entsprechenden Flanke (25, 26, 55, 56) und demjenigen (r_{P1,} r_{P2}, r_{P3}, r_{P4}) des Hauptkreisbogens einer Zone mit vielen Radien zwischen 0,1 und 0,4 liegt.

7. Rohrförmiges Gewindeelement nach einem der Ansprüche 1 bis 5, **dadurch gekennzeichnet, dass** jede sekundäre Kurve (25, 26, 27, 55, 56) der Zone mit vielen Radien mit einer Länge ungleich Null ein Kreisbogen ist.

8. Rohrförmiges Gewindeelement nach Anspruch 7, **dadurch gekennzeichnet, dass** das Verhältnis zwischen dem Radius (r_{S1}, r_{S2}, r_{S3}, r_{S4}, r_{T1}) des Kreisbogens jeder sekundären Kurve mit einer Länge ungleich Null (25, 26, 27, 55, 56) und demjenigen (rP1, rp2, rp3, rP4) des Hauptkreisbogens einer Zone mit vielen Radien zwischen 0,1 und 0,4 liegt.

9. Rohrförmiges Gewindeelement nach einem der Ansprüche 1 bis 8, **dadurch gekennzeichnet, dass** nur die tangentiale Gewindeganggrund-Anschlusszone an die Trägerflanke (21, 22) eine Zone mit vielen Radien ist.

10. Rohrförmiges Gewindeelement nach einem der Ansprüche 1 bis 8, **dadurch gekennzeichnet, dass** jede der beiden tangentialen Gewindeganggrund-Anschlusszonen eine Zone mit vielen Radien ist.

11. Rohrförmiges Gewindeelement nach Anspruch 10, **dadurch gekennzeichnet, dass** der Radius (r_{P1}, r_{P2}) des Hauptkreisbogens (23, 24) der Zone mit vielen Radien auf der Seite der Trägerflanke größer als der oder gleich demjenigen (r_{P3}, r_{P4}) des Hauptkreisbogens (53, 54) der Zone mit vielen Radien auf der Seite der Eingriffsflanke ist.

12. Rohrförmiges Gewindeelement nach einem der Ansprüche 1 bis 11, **dadurch gekennzeichnet, dass** der Winkel (A, B), den jede der Flanken mit der Senkrechten zur Achse des Gewindeelements bildet, positiv oder Null ist.

13. Rohrförmige Gewindeverbindung (100, 300) mit hoher Festigkeit gegenüber statischen und dynamischen Beanspruchungen, mit einem rohrförmigen Einsteck-Gewindeelement (1) am Ende eines ersten Rohrs (101, 301), das durch Schraubverbindung mit einem rohrförmigen Aufnahme-Gewindeelement (2), das am Ende eines zweiten Rohrs (102, 302) angeordnet ist, mittels eines Außengewindes (3, 303, 303') auf dem Einsteck-Gewindeelement und eines Innengewindes (4, 304, 304') auf dem Aufnahme-Gewindeelement zusammengesetzt wird, wobei die Gewindegänge (11, 12) des Außengewindes und des Innengewindes einen Gewindegangscheitel (17, 20, 81, 82), einen Gewindeganggrund (18, 19, F1, F2), eine geradlinige Trägerflanke (13, 14), eine geradlinige Eingriffsflanke (15, 16) und vier Anschlusszonen mit je einem Kreisbogen aufweisen, von denen zwei tangentiale Gewindeganggrund-Anschlusszonen (21, 22, 51, 52) je den Gewindeganggrund mit einer Flanke verbinden und zwei Gewindegangscheitel-Anschlusszonen (31, 32, 41, 42) je den Gewindegangscheitel mit einer Flanke verbinden, wobei das Profil und die Anordnung jeder Gewindegangscheitel-Anschlusszone ausgelegt sind, um nicht mit der tangentialen Gewindeganggrund-Anschlusszone des dazugehörigen Gewindeelements zu interferieren, **dadurch gekennzeichnet, dass** mindestens eines der beiden rohrförmigen Gewindeelemente ein so genanntes Gewindeelement mit ermüdungsfestem Profil nach einem der Ansprüche 1 bis 12 ist.

14. Rohrförmige Gewindeverbindung nach Anspruch 13, **dadurch gekennzeichnet, dass** mindestens eine Gewindegangscheitel-Anschlusszone eines rohrförmigen Gewindeelements gegenüber einer tangentialen Gewindeganggrund-Anschlusszone mit vielen Radien eines zugehörigen rohrförmigen Gewindeelements mit ermüdungsfestem Profil eine so genannte Nachlaufzone (31, 32) ist, die zwei Kreisbögen aufweist, die sich tangential aneinander anschließen, von denen einer ein Hauptkreisbogen (33, 34) und der andere ein sekundärer Kreisbogen (35, 36) ist, dieser letztere, um den tangentialen Anschluss der Gewindegangscheitel-Anschlusszone an die entsprechende Flanke durchzuführen, und dass im so genannten oberen Anschlusspunkt (P_{RH1}, P_{RH2}) der entsprechenden Flanke, wo der Trägerkreis des Hauptkreisbogens der Nachlaufzone die Trägergerade der entsprechenden Flanke schneidet, die Tangente zum Kreis einen strikt negativen spitzen Winkel (G, H) mit der Trägergeraden der betreffenden Flanke bildet.

15. Rohrförmige Gewindeverbindung nach Anspruch 13 oder Anspruch 14, **dadurch gekennzeichnet, dass** die beiden Einsteck- und Aufnahme-Gewindeelemente der rohrförmigen Gewindeverbindung von der Art nach einem der Ansprüche 1 bis 12 sind.

16. Rohrförmige Gewindeverbindung nach einem der Ansprüche 13 bis 15, **dadurch gekennzeichnet, dass** die Gewinde vom interferierenden Typ sind, wobei der Gewindegangscheitel (20) eines Gewindes (4) radial mit dem Gewindeganggrund (19) des zugehörigen Gewindes (3) interferiert.

17. Rohrförmige Gewindeverbindung nach einem der Ansprüche 13 bis 15, **dadurch gekennzeichnet, dass** die beiden Gewindegangflanken (13, 15) eines Gewindes (3) mit den beiden Gewindegangflanken (14, 16) des zugehörigen Gewindes (4) über mindestens einen Teil der Länge der Gewinde (3, 4) mit oder ohne Kontaktdruck in Kontakt sind.
